(19) Europäisches Patentamt
European Patent Office
Office européen des brevets

(11) EP 3 531 607 B1

(12) **EUROPEAN PATENT SPECIFICATION**

(45) Date of publication and mention of the grant of the patent:
**31.07.2024 Bulletin 2024/31**

(21) Application number: **17888698.2**

(22) Date of filing: **08.12.2017**

(51) International Patent Classification (IPC):
***H04L 5/00*** *(2006.01)* ***H04W 52/14*** *(2009.01)*
***H04W 52/24*** *(2009.01)* ***H04W 52/16*** *(2009.01)*
***H04W 52/50*** *(2009.01)*

(52) Cooperative Patent Classification (CPC):
**H04W 52/146; H04L 5/00; H04W 52/16; H04W 52/242; H04W 52/50; H04W 72/04**

(86) International application number:
**PCT/CN2017/115338**

(87) International publication number:
**WO 2018/121225 (05.07.2018 Gazette 2018/27)**

# (54) COMMUNICATION METHOD, ACCESS NETWORK DEVICE AND TERMINAL

KOMMUNIKATIONSVERFAHREN, ZUGANGSNETZWERKVORRICHTUNG UND ENDGERÄT

PROCÉDÉ DE COMMUNICATION, DISPOSITIF DE RÉSEAU D'ACCÈS ET TERMINAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.12.2016 CN 201611262992**

(43) Date of publication of application:
**28.08.2019 Bulletin 2019/35**

(73) Proprietor: **Huawei Technologies Co., Ltd.**
**Longgang District**
**Shenzhen, Guangdong 518129 (CN)**

(72) Inventors:
- **SUN, Wei**
**Shenzhen**
**Guangdong 518129**
**(CN)**
- **GUO, Zhiheng**
**Shenzhen**
**Guangdong 518129 (CN)**
- **CHENG, Xingqing**
**Shenzhen**
**Guangdong 518129 (CN)**
- **XIE, Xinqian**
**Shenzhen**
**Guangdong 518129**
**(CN)**

(74) Representative: **Maiwald GmbH**
**Elisenhof**
**Elisenstraße 3**
**80335 München (DE)**

(56) References cited:
**EP-A1- 2 741 552** **EP-A1- 3 139 669**
**WO-A1-2015/168930** **CN-A- 104 540 207**
**CN-A- 104 717 738** **CN-A- 104 754 717**
**US-A1- 2011 081 927** **US-A1- 2013 195 073**
**US-A1- 2015 117 307**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

This application claims priority to Chinese Patent Application No. 201611262992.0, filed with the Chinese Patent Office on December 30, 2016 and entitled "INFORMATION TRANSMISSION METHOD, ACCESS NETWORK DEVICE, AND TERMINAL".

## TECHNICAL FIELD

This application relates to the field of communications technologies, and in particular, to a communication method, an access network device, and a terminal.

## BACKGROUND

As wireless communications systems evolve, frequency spectrums that can be used are continually spreading, and how to transmit information on carriers with different frequencies becomes critical. When uplink transmission is performed on a carrier, a path loss on the carrier needs to be obtained to limit power in the uplink transmission. Otherwise, it is possibly that uplink data on the carrier cannot be sent. Currently, an uplink carrier always has a corresponding downlink carrier, a difference between carrier frequencies of the two carriers is relatively small, and path losses are basically the same. Therefore, a user can obtain the path loss by using a downlink pilot through measurement. For example, for frequency division duplex (English: Frequency Duplexing Division, FDD for short), there are a downlink carrier and an uplink carrier in pairs, a difference between carrier frequencies of the two carriers is relatively small, and path losses are basically the same. Therefore, a channel path loss obtained through measurement on the downlink carrier may be used to perform power control on the uplink carrier in the pair. For another example, for time division duplex (English: Time Duplexing Division, TDD for short), an uplink and a downlink are on a same carrier, a path loss obtained through measurement in a downlink subframe may be used to perform power control in an uplink subframe. However, for some systems in which communications carriers differ relatively greatly in carrier frequency, usually, path losses on the carriers differ relatively greatly. In this case, a user cannot directly perform, by using a path loss obtained through measurement on one carrier, uplink transmission on another carrier. If the path loss is directly used, it is possibly that uplink data on the another carrier cannot be sent. For example, with development of the communications systems, it is required that a next-generation communications system should not affect performance of a current communications system, that is, the next-generation communications system should coexist with the current communications system. For example, a long term evolution (English: Long Term Evolution, LTE for short) system can coexist with a third-generation mobile communications technology (English: The Third Generation Mobile Communications Technology, 3G for short) system at adjacent frequencies. Because a fifth-generation mobile communications technology (English: The Fifth Generation Mobile Communications Technology, 5G for short) system and the LTE system both support a carrier frequency below 6 GHz, a 5G NR system and the LTE system may coexist at a frequency below 6 GHz. 5G NR and LTE can coexist on a same frequency band, and performance of 5G NR and performance of LTE cannot affect each other. From a perspective of frequency band utilization, some frequency bands deployed with LTE may have relatively low frequency band usage due to a traffic requirement and change. For example, for an uplink frequency band, because uplink traffic is relatively light, LTE frequency division duplex uplink (English: Frequency Duplexing Division Up-Link, FDD UL) frequency bands have relatively low utilization. In 5G NR, some bandwidths of the frequency bands or some subframes of the frequency bands may be used to bear 5G NR transmission. In other words, 5G NR is supported in multiplexing a same frequency band and sharing a same frequency band resource with LTE. A carrier frequency of a shared carrier in 5G NR and LTE usually differs relatively greatly from a carrier frequency of a dedicated carrier in 5G NR. For example, the carrier frequency of the shared carrier is 2.0 GHz, and the carrier frequency of the dedicated carrier in 5G NR is 3.5 GHz, or the carrier frequency of the dedicated carrier in 5G NR is in a higher frequency band. In this case, path losses on the two carriers differ relatively greatly, and consequently, a path loss obtained through measurement on the dedicated carrier in 5G NR cannot be directly used for uplink transmission on the shared carrier. US 2015/117307 A1 describes a method of wireless communication including modifying an initial transmit power for a subsequent uplink physical channel based on the difference between the desired received powers of the subsequent uplink physical channel and a random access physical channel. When the difference between the desired power of the subsequent uplink physical channel and the random access physical channel is above a predefined threshold, the modification is based on a first adjusted factor. When the subsequent uplink physical channel and random access physical channel are on different frequencies (or time slots) the modification is based on a second adjusted factor. US 2011/081927 A1 describes a method for assisting a User Equipment (UE) to determine transmit power to be used on a first uplink component carrier y, wherein the base station is configured to communicate with the UE over a plurality of uplink and downlink component carriers x,y. EP 2 741 552 A1 describes a communication method in a communication system in which a base station and a terminal communicate with each other, in which the base station can efficiently notify the terminal of control information. EP 3 139 669 B1 describes a method for controlling power of a carrier signal, a user equipment and a base station. US 2013 / 019 50 73 describes a low-cost LTE system with a distributed carrier aggregation on an unlicensed band.

## SUMMARY

This application provides a communication method, an access network device, and a terminal, to resolve a problem that an uplink signal cannot be sent due to a relatively large difference between frequencies of communication carriers. The present application is defined in the appended independent claims. Further implementations are disclosed in the pending dependent claims. In the following, implementations not falling within the scope of the claims are to be understood as examples useful for understanding the application.

According to a first aspect, this application provides a communication method, including:
determining, by an access network device, a power parameter; and receiving an uplink signal sent by the terminal based on the power parameter.

In some possible implementations, after the determining, by an access network device, a power parameter, the access network device further sends first information to the terminal, where the first information is used to indicate the power parameter.

That is, the power parameter on which the terminal is based is determined by the access network device and sent by the access network device to the terminal, or may be directly determined by the terminal.

The power parameter includes at least one of a transmit power of the terminal on a first carrier and a power adjustment parameter, and the first carrier is an uplink carrier.

The first information is carried on a second carrier. For example, the first carrier may be an uplink frequency division duplex (English: Frequency Duplexing Division, FDD for short) carrier using a first radio access technology (English: Radio Access Technology, RAT for short) and a second RAT, and the second carrier may be a carrier using the first RAT. For another example, the first carrier may be an uplink carrier using a first RAT, and the second carrier may also be a carrier using the first RAT.

Optionally, the first information may be high layer information, for example, a system message or radio resource control (English: Radio Resource Control, RRC for short) signaling. Alternatively, the first information may be physical layer downlink control information (English: Downlink Control Information, DCI for short).

According to the present invention, the power parameter includes an initial transmit power of the terminal on the first carrier, and the first information is used to indicate the initial transmit power. After the sending, by the access network device, first information to the terminal, the method further includes: receiving, by the access network device, a reference signal sent by the terminal at the initial transmit power; obtaining a receive power of the reference signal through measurement; and sending second information to the terminal, where the second information is used to indicate the receive power or indicate a path loss obtained by using the receive power.

The reference signal is carried on the first carrier, and the second information is carried on the second carrier. After obtaining the receive power of the reference signal through measurement, the access network device may directly send the second information to the terminal. That is, the second information is used to indicate the receive power. Alternatively, after obtaining the receive power of the reference signal through measurement, the access network device may further determine the path loss on the first carrier based on the receive power and the initial transmit power, and send the second information to the terminal. That is, the second information is used to indicate the determined path loss.

According to the present invention, the power parameter includes an initial transmit power of the terminal on the first carrier, and the first information is used to indicate the initial transmit power. Further, the initial transmit power may be an initial transmit power at which the terminal sends a random access preamble to the access network device, the power parameter may further include the power adjustment parameter, the power adjustment parameter is used to indicate information about an accumulated power value, and the accumulated power value is used to adjust a transmit power at which the terminal sends the random access preamble to the access network device.

Optionally, the initial transmit power on the first carrier may be pre-configured by a base station, or may be determined by a base station based on a position of UE.

In some possible implementations, the power parameter includes the power adjustment parameter, and the power adjustment parameter is the difference between the path losses. In this case, the determining, by an access network device, a power parameter includes: determining, by the access network device, a difference between path losses on the first carrier and a second carrier, where the second carrier is a carrier carrying the first information.

Optionally, the difference between the path losses on the first carrier and the second carrier may be determined by a base station based on carrier frequencies of the first carrier and the second carrier, or may be determined based on the path loss on the first carrier and the path loss on the second carrier.

In some possible implementations, the determining, by the access network device, a difference between path losses on the first carrier and a second carrier includes: determining, by the access network device, the difference between the path losses on the first carrier and the second carrier based on a carrier frequency of the first carrier and a carrier frequency of the second carrier; or determining, by the access network device, the difference between the path losses on the first carrier and the second carrier based on a carrier frequency of the first carrier, a carrier frequency of the second carrier, and a prestored correspondence.

The prestored correspondence may include a correspondence among the carrier frequency of the first carrier, the carrier frequency of the second carrier, and the difference between the path losses on the first carrier and the second carrier, or the prestored correspondence includes a correspondence between a quotient of the carrier frequency of the first carrier and the carrier frequency of the second carrier and the difference between the path losses on the first carrier and the second carrier, or the prestored correspondence may include a correspondence among the carrier frequency of the first carrier, the path loss corresponding to the first carrier, the carrier frequency of the second carrier, and the path loss corresponding to the second carrier, where the difference between the path losses is a difference between a path loss corresponding to the first carrier frequency and a path loss corresponding to the carrier frequency of the second carrier.

In some possible implementations, the difference between the path losses on the first carrier and the second carrier satisfies the following formula: 20log10(fc1)-20log10(fc2) or $20\log(fc_1/fc_2)$, where $fc_1$ represents one of the carrier frequency of the first carrier and the carrier frequency of the second carrier, and $fc_2$ represents the other of the carrier frequency of the first carrier and the carrier frequency of the second carrier.

In some possible implementations, the power parameter is the power adjustment parameter, and the power adjustment parameter includes the parameter used to adjust the path loss compensation factor. In this case, the determining, by an access network device, a power parameter includes: receiving, by the access network device, the uplink signal sent by the terminal; and determining, by the access network device based on a receive power of the uplink signal, a parameter used to adjust a path loss compensation factor.

Optionally, the parameter used to adjust the path loss compensation factor may be determined based on a comparison result of comparing the receive power of the uplink signal that is obtained through measurement with a target receive power of the terminal. The parameter used to adjust the path loss compensation factor may be an adjusted path loss compensation factor, or may be a difference between the path loss compensation factor before the adjustment and an adjusted path loss compensation factor. The target receive power may be pre-configured.

Further, optionally, the base station may pre-configure an initial path loss compensation factor, and notifies the terminal of the path loss compensation factor, for example, sends the path loss compensation factor to the terminal on the second carrier.

According to a second aspect, this application further provides a communication method, including:

determining, by a terminal, a power parameter, and sending an uplink signal on a first carrier based on the power parameter.

In some possible implementations, the determining, by a terminal, a power parameter includes: receiving, by the terminal, first information sent by an access network device, where the first information is used to indicate the power parameter.

The first information is used to indicate the power parameter, the power parameter includes at least one of a transmit power of the terminal on the first carrier and a power adjustment parameter, and the first carrier is an uplink carrier. The first information is carried on a second carrier. For example, the first carrier may be an uplink FDD carrier using a first RAT and a second RAT, and the second carrier may be a carrier using the first RAT. For another example, the first carrier may be an uplink carrier using a first RAT, and the second carrier may also be a carrier using the first RAT.

Optionally, the first information may be a system message, RRC signaling, DCI information, or the like.

In some possible implementations, the power parameter includes an initial transmit power of the terminal on the first carrier, and the first information is used to indicate the initial transmit power. In this case, the sending, by the terminal, an uplink signal on the first carrier based on the power parameter includes: sending, by the terminal, a reference signal to the access network device based on the initial transmit power; receiving second information sent by the access network device, where the second information is used to indicate a receive power obtained by the access network device based on the reference signal or is used to indicate a path loss obtained by the access network device by using the receive power; and sending the uplink signal on the first carrier based on the receive power or the path loss.

The reference signal is carried on the first carrier, and the second information is carried on the second carrier. The second information may indicate a receive power of the reference signal, or the path loss that is on the first carrier and that is determined by the access network device based on the receive power.

In some possible implementations, the second information indicates the receive power of the reference signal. In this case, the sending, by the terminal, the uplink signal on the first carrier based on the receive power includes: determining, by the terminal, a path loss on the first carrier based on the receive power of the reference signal and the initial transmit power; and sending the uplink signal on the first carrier based on the determined path loss.

In some possible implementations, the power parameter includes the initial transmit power of the terminal on the first carrier, the power parameter further includes the power adjustment parameter, and the power adjustment parameter is used to indicate information about an accumulated power value. That is, the first information is used to indicate the initial transmit power and the accumulated power value. Further, the sending, by the terminal, an uplink signal on the first carrier based on the power parameter includes: sending, by the terminal, a random access preamble to the access network device based on the initial transmit power; if random access fails, adjusting, by the terminal based on the accumulated power value, a transmit power for sending the random access preamble, and sending the random access preamble at an adjusted transmit power, until the random access succeeds; and when the random access succeeds, sending, by the terminal, the uplink signal on the first carrier based on a transmit power used when the random access succeeds.

The random access preamble is carried on the first carrier. Optionally, when the random access fails, the terminal may re-send the random access preamble based on the accumulated power value, and a transmit power of the re-sent random access preamble may be a power value of a previously sent random access preamble plus the accumulated power value.

In some possible implementations, the power parameter includes the power adjustment parameter, and the power adjustment parameter includes a difference between a path loss on the first carrier and the path loss on the second carrier. The terminal may further obtain a path loss on a second carrier, where the second carrier is a carrier carrying the first information. In this case, the sending, by the terminal, an uplink signal on the first carrier based on the power parameter includes: determining, by the terminal, a transmit power based on the path loss on the second carrier and the difference, and sending the uplink signal on the first carrier based on the determined transmit power.

Optionally, the access network device may send the reference signal on the second carrier. The terminal may receive, on the second carrier, the reference signal sent by a base station on the second carrier, obtain a transmit power of the reference signal, and obtain the receive power of the reference signal through measurement, so that the terminal can obtain the path loss on the second carrier based on the transmit power of the reference signal on the second carrier and the receive power of the reference signal. For example, a difference between the transmit power of the reference signal and the receive power of the reference signal is used as the path loss on the second carrier.

In some possible implementations, the power parameter may include the power adjustment parameter, the power adjustment parameter is a difference between path losses on the first carrier and a second carrier, and the determining, by a terminal, a power parameter includes: determining, by the terminal, the difference between the path losses on the first carrier and the second carrier based on a carrier frequency of the first carrier and a carrier frequency of the second carrier; or determining, by the terminal, the difference between the path losses on the first carrier and the second carrier based on a carrier frequency of the first carrier, a carrier frequency of the second carrier, and a prestored correspondence.

The prestored correspondence may include a correspondence among the carrier frequency of the first carrier, the carrier frequency of the second carrier, and the difference between the path losses on the first carrier and the second carrier, or the prestored correspondence includes a correspondence between a quotient of the carrier frequency of the first carrier and the carrier frequency of the second carrier and the difference between the path losses on the first carrier and the second carrier, or the prestored correspondence may include a correspondence among the carrier frequency of the first carrier, the path loss corresponding to the first carrier, the carrier frequency of the second carrier, and the path loss corresponding to the second carrier, where the difference between the path losses is a difference between a path loss corresponding to the first carrier frequency and a path loss corresponding to the carrier frequency of the second carrier. In this way, the terminal can determine the transmit power of the uplink signal on the first carrier by using the obtained path loss on the second carrier and the difference that is between the path losses on the first carrier and the second carrier and that is determined by the terminal.

In some possible implementations, the difference between the path losses on the first carrier and the second carrier satisfies the following formula: 20log10(fc1)-20log10(fc2) or $20\log(fc_1/fc_2)$, where $fc_1$ represents one of the carrier frequency of the first carrier and the carrier frequency of the second carrier, and $fc_2$ represents the other of the carrier frequency of the first carrier and the carrier frequency of the second carrier.

In some possible implementations, the terminal may further obtain a path loss on a second carrier, where the second carrier is a carrier carrying the first information; and the terminal determines a transmit power based on the path loss on the second carrier, and sends the uplink signal on the first carrier based on the determined transmit power. The power parameter is the power adjustment parameter, the power adjustment parameter includes a parameter used to adjust a path loss compensation factor, and the parameter used to adjust the path loss compensation factor may be determined by the access network device based on a receive power of the uplink signal. Further, the sending, by the terminal, an uplink signal on the first carrier based on the power parameter includes: adjusting, by the terminal, a transmit power based on the path loss on the second carrier and the parameter used to adjust the path loss compensation factor, and sending the uplink signal on the first carrier based on an adjusted transmit power.

Optionally, the terminal may determine the transmit power on the first carrier based on the path loss compensation factor configured by the base station and the path loss on the second carrier, so that UE can send the uplink signal on the first carrier based on a transmit power that is compensated for by using the path loss compensation factor.

Further, optionally, the parameter used to adjust the path loss compensation factor may be an adjusted path loss compensation factor, or may be a difference between the path loss compensation factor before the adjustment and an adjusted path loss compensation factor.

According to a third aspect, this application further provides a communication method, including:

determining, by an access network device, a parameter of a reference signal, where the reference signal is carried on a third carrier and is sent by the access network device to the terminal, and the reference signal is used to determine a path loss on the first carrier; and
sending, by the access network device, first information to the terminal on a second carrier, where the first information is used to indicate the parameter of the reference signal.

The first carrier is an uplink FDD carrier using a first RAT and a second RAT, the third carrier is a downlink FDD carrier using the second RAT, and the second carrier is a carrier using the first RAT.

In some possible implementations, the parameter of the reference signal may be a parameter of a cell reference signal (English: Cell Reference Signal, CRS for short) on the third carrier, and the parameter of the CRS may include at least one of a cell number, a transmit power, a sequence generation manner, and a time-frequency position.

According to a fourth aspect, this application further provides a communication method, including:

receiving, by a terminal on a second carrier, first information sent by an access network device, where the first information is used to indicate a parameter of a reference signal, the reference signal is carried on a third carrier and is sent by the access network device to the terminal, and the reference signal is used to determine a path loss on a first carrier;
receiving, by the terminal, the reference signal on the third carrier based on the parameter of the reference signal, and determining a path loss on the third carrier based on the reference signal; and
sending, by the terminal based on the path loss on the third carrier, an uplink signal on the first carrier.

In some possible implementations, the parameter of the reference signal may be a parameter of a CRS on the third carrier, and the parameter of the CRS may include at least one of a cell number, a transmit power, a sequence generation manner, and a time-frequency position.

In some possible implementations, the determining, by the terminal, a path loss on the third carrier based on the reference signal may be specifically: obtaining, by the terminal, a receive power of the reference signal through measurement, and determining the path loss on the third carrier based on the transmit power of the reference signal and the receive power of the reference signal. In this way, the terminal can use the path loss on the third carrier as the path loss on the first carrier, to determine a transmit power corresponding to the path loss on the third carrier, where the transmit power is a transmit power on the first carrier. Therefore, UE can perform uplink transmission on the first carrier based on the determined transmit power.

According to a fifth aspect, this application further provides an access network device. The access network device includes a determining module and a communications module. The access network device implements, by using the modules, some or all steps of the communication method according to the first aspect or some or all steps of the communication method according to the third aspect.

According to a sixth aspect, this application further provides a terminal. The terminal includes a determining module and a communications module. The terminal implements, by using the modules, some or all steps of the communication method according to the second aspect or some or all steps of the communication method according to the fourth aspect.

According to a seventh aspect, this application further provides a computer storage medium. The computer storage medium stores a program, and when executed, the program includes some or all steps of the communication method according to the first aspect or some or all steps of the communication method according to the third aspect.

According to an eighth aspect, this application further provides a computer storage medium. The computer storage medium stores a program, and when executed, the program includes some or all steps of the communication method according to the second aspect or some or all steps of the communication method according to the fourth aspect.

According to a ninth aspect, this application further provides an access network device, including a communications interface, a memory, and a processor. The processor is connected to the communications interface and the memory, where

the memory is configured to store a program instruction; and
the processor is configured to invoke the program instruction in the memory to perform some or all steps of the communication method according to the first aspect or some or all steps of the communication method according to the third aspect.

According to a tenth aspect, this application further provides a terminal, including a communications interface, a memory, and a processor. The processor is connected to the communications interface and the memory, where

the memory is configured to store a program instruction; and
the processor is configured to invoke the program instruction in the memory to perform some or all steps of the communication method according to the second aspect or some or all steps of the communication method according to the fourth aspect.

According to an eleventh aspect, this application further provides a communications system, including an access network device and a terminal. The access network device is configured to perform some or all steps of the communication method according to the first aspect or some or all steps of the communication method according to the third aspect. The terminal is configured to perform some or all steps of the communication method according to the second aspect or some or all steps of the communication method according to the fourth aspect.
In the technical solutions provided in this application, the base station determines the transmit power of the terminal on the first carrier and/or the power parameter of the power adjustment parameter, and sends the power parameter to the terminal, so that the terminal can send an uplink reference signal on the first carrier based on the power parameter, that is, implement uplink transmission on the first carrier. This resolves a problem that an uplink signal cannot be sent due to a relatively large difference between carrier frequencies, and can implement carrier sharing between different communications systems.

## BRIEF DESCRIPTION OF DRAWINGS

FIG. 1 is an architectural diagram of a communications system according to an embodiment of the present invention;
FIG. 2 is a schematic diagram of frequency bands used in a 5G system and an LTE system according to an embodiment of the present invention;
FIG. 3 is a schematic interaction diagram of a communication method according to an embodiment of the present invention;
FIG. 4 is a schematic interaction diagram of another communication method according to an embodiment of the present invention;
FIG. 5 is a schematic interaction diagram of still another communication method according to an embodiment of the present invention;
FIG. 6 is a schematic interaction diagram of still another communication method according to an embodiment of the present invention;
FIG. 7 is a schematic interaction diagram of still another communication method according to an embodiment of the present invention;
FIG. 8 is a schematic interaction diagram of still another communication method according to an embodiment of the present invention;
FIG. 9 is a schematic structural diagram of an access network device according to an embodiment of the present invention;
FIG. 10 is a schematic structural diagram of a terminal according to an embodiment of the present invention;
FIG. 11 is a schematic structural diagram of a communications system according to an embodiment of the present invention;
FIG. 12 is a schematic structural diagram of another access network device according to an embodiment of the present invention; and
FIG. 13 is a schematic structural diagram of another terminal according to an embodiment of the present invention.

## DESCRIPTION OF EMBODIMENTS

The following describes the technical solutions in this application with reference to the accompanying drawings of the embodiments of the present invention.
Terms such as "first" and "second" used in this application are used to distinguish between different objects rather than describing a particular sequence. In addition, the terms "including" or any other variant thereof, are intended to cover a non-exclusive inclusion. For example, a process, a method, a system, a product, or a device that includes a series of steps or modules is not limited to the listed steps or modules, but optionally further includes an unlisted step or module, or optionally further includes another inherent step or unit of the process, the method, the product, or the device.
It should be understood that, the technical solutions in this application may be applied to communications systems using various radio access technologies, such as code division multiple access (English: Code Division Multiple Access, CDMA for short), wideband code division multiple access (English: Wideband Code Division Multiple Access, WCDMA for short), time division-synchronous code division multiple access (English: Time Division-Synchronous Code Division Multiple Access, TD-SCDMA for short), universal mobile telecommunications system (English: Universal Mobile Telecommunication System, UMTS for short), a long term evolution (English: Long Term Evolution, LTE for short) system, and a fifth generation mobile communication technology (English: The Fifth Generation Mobile Communication Technology, 5G for short). This is not limited in the embodiments of the present invention. As the radio access technologies continually develop, the technical solutions in this application may further be applied to a future network.

In this application, the terminal may alternatively be referred to as user equipment (English: User Equipment, UE for short), a mobile station (English: Mobile Station, MS for short), a wireless terminal, a mobile terminal, or the like. The terminal may communicate with one or more core networks by using a radio access network (for example, RAN, radio access network). The terminal may be a mobile terminal such as a mobile phone (or referred to as a "cellular" phone) and a computer having a mobile terminal, or may be a portable, pocket-sized, handheld, computer built-in, or in-vehicle mobile apparatus. They exchange voice, data, and/or the like with the radio access network. In this application, the access network device may be a base station, for example, a base transceiver station in GSM or CDMA, for example, a base transceiver station (English: Base Transceiver Station, BTS for short), a NodeB in WCDMA, for example, a NodeB, an evolved base station in LTE, for example, an eNB or eNodeB (evolved Node B), a base station in a 5G system, or a base station in another future network. This is not limited in the embodiments of the present invention.

The following describes application scenarios of the embodiments of the present invention. FIG. 1 is an architectural diagram of a communications system according to an embodiment of the present invention. Specifically, as shown in FIG. 1, the communications system includes an access network device and a terminal. The access network device and the terminal may communicate by using various radio access technologies. In this embodiment of the present invention, that the access network device is a base station and the terminal is UE is used as an example for description. The base station and the UE may communicate by using various radio access technologies, for example, the 5G system in the foregoing wireless communications systems, which may be specifically a 5G NR system, and for another example, an LTE system or a 3G system.

Specifically, the 5G NR system may support a carrier frequency (that is, a carrier frequency) below 6 GHz, or may support a carrier frequency above 6 GHz, for example, 30 GHz, or may support both a single carrier scheme and a multicarrier aggregation scheme. The LTE system supports a carrier frequency below 6 GHz, including paired FDD frequency bands, unpaired TDD frequency bands, and carrier aggregation with a same duplex mode or different duplex modes. Therefore, in a frequency band below 6 GHz, a same frequency band may coexist in 5G NR and LTE. In other words, 5G NR and LTE may share a frequency band below 6 GHz. Further, from a perspective of frequency band utilization, some frequency bands deployed with LTE may have relatively low frequency band usage due to a traffic requirement and change. For example, for an uplink frequency band, because uplink traffic is relatively light, LTE FDD uplink frequency bands have relatively low utilization. In 5G NR, some bandwidths of the frequency bands or some subframes of the frequency bands may be used to bear 5G NR information transmission. In other words, 5G NR is supported in multiplexing a same frequency band and sharing a same frequency band resource with LTE.

For example, as shown in FIG. 2, 5G NR and LTE may share an LTE FDD uplink carrier. It is assumed that a shared carrier of 5G NR and LTE is a first carrier and a frequency band thereof is f2; a dedicated carrier of 5G NR is a second carrier and a frequency band thereof is f3; and a dedicated carrier of LTE is a third carrier, which is an LTE FDD downlink carrier, and a frequency band thereof is f1. For two carriers used in 5G NR, carrier frequencies of the first carrier and the second carrier are different. UE in 5G NR may perform uplink transmission on the first carrier and perform downlink transmission on the second carrier, or may perform downlink transmission and uplink transmission on the second carrier. When performing uplink transmission on the first carrier, the UE needs to obtain a path loss that is on the first carrier, to perform power control, thereby communicating with the base station by using the shared LTE FDD uplink carrier.

For another example, it is assumed that in 5G NR, a carrier, that is, a primary component carrier in 5G NR, deployed at a relatively high carrier frequency is used as, for example, the second carrier. To ensure coverage of a 5G NR system, a low-frequency carrier further needs to be deployed as a secondary component carrier, for example, as the first carrier. In other words, the first carrier and the second carrier have different carrier frequencies. During carrier allocation, the first carrier may neighbor to a carrier in another communications system, for example, may neighbor to a carrier in LTE or neighbor to a carrier in 3G. To reduce impact on the communications system of the neighboring carrier, the first carrier may be used to transmit only an uplink signal in 5G NR. Alternatively, during carrier allocation, an uplink carrier in an LTE FDD frequency spectrum may be completely applied to an NR system due to very low load, and the first carrier is used to transmit only the uplink signal in 5G NR. When performing uplink transmission on the first carrier, the UE needs to obtain a path loss that is on the first carrier, to perform power control, thereby communicating with the base station by using the first carrier.

This application discloses an information sending method, an access network device, a terminal, and a system, to resolve a problem that an uplink signal cannot be sent due to a relatively large difference between frequencies of communication carriers. Detailed descriptions are provided below.

FIG. 3 is a schematic interaction diagram of a communication method according to an embodiment of the present invention. Specifically, as shown in FIG. 3, the communication method in this embodiment of the present invention may include the following steps.

101. A base station determines an initial transmit power of UE on a first carrier.

Specifically, the base station may determine a power parameter, and the power parameter includes the initial transmit power of the UE on the first carrier. That is, the initial transmit power is used by the UE to send a reference signal on the first carrier.

Optionally, when the base station determines the initial transmit power that is on the first carrier, the initial transmit power on the first carrier may be pre-configured by the base station. For example, when the base station can send only a downlink signal on a second carrier, the base station cannot learn position information of the UE in a cell. Therefore, the base station may determine a same transmit power in an entire network. Further, optionally, the initial transmit power may be 23 dBm or another value. This is not limited in this embodiment of the present invention.

Optionally, when the base station determines the initial transmit power that is on the first carrier, the initial transmit power on the first carrier may be determined by the base station based on a position of the UE. For example, on the second carrier, when the base station can both send a downlink signal and receive an uplink signal sent by the UE, the base station can determine, based on reference signal received power (English: Reference Signal Received Power, RSRP for short) information reported by the UE, a position of the UE in a cell covered by the base station, for example, determine whether the UE is in a cell center or at a cell edge, to determine the initial transmit power. Further, optionally, a power threshold may be preset. When the RSRP is greater than or equal to the power threshold, the base station can determine that the UE is a cell center user, and may allocate a relatively low initial transmit power, for example, 15 dBm, to the UE. When the RSRP is less than the power threshold, the base station can determine that the UE is a cell edge user, and may allocate a relatively high initial transmit power, for example, 23 dBm, to the UE.

Optionally, the initial transmit power on the first carrier may alternatively be determined in another manner. For example, the initial transmit power may be obtained and notified to the base station and the UE by using another network side device. This is not limited in this embodiment of the present invention.

102. The base station sends, to the UE on a second carrier, first information used to indicate the initial transmit power.

Specifically, the base station may determine the power parameter, and the power parameter includes the initial transmit power of the UE on the first carrier. That is, the initial transmit power is used by the UE to send the reference signal on the first carrier. After the initial transmit power is determined, the base station may send the first information on the second carrier, where the first information is used to indicate the initial transmit power on the first carrier.

Optionally, the first information may be high layer information, for example, a system message or RRC signaling. Alternatively, optionally, the first information may be physical layer downlink DCI information. For example, when the initial transmit power is determined by the base station through pre-configuration, the first information may be a system message. For another example, when the initial transmit power is determined by the base station based on the position of the UE, the first information may be RRC signaling or DCI information. Descriptions are not numerated herein.

103. The UE receives the first information on the second carrier, to obtain the initial transmit power.

104. The UE sends an uplink reference signal on the first carrier based on the initial transmit power.

Specifically, the UE may receive the first information sent by the base station, and determine the initial transmit power indicated in the first information, so that the UE can send the uplink reference signal on the first carrier based on the initial transmit power.

105. The base station receives the uplink reference signal on the first carrier, and obtains a receive power of the uplink reference signal through measurement.

106. The base station sends second information on the second carrier.

Optionally, the base station may calculate a path loss of the UE and the base station on the first carrier based on the receive power of the uplink reference signal that is obtained through measurement and the initial transmit power of the UE on the first carrier, for example, use a difference between the initial transmit power and the receive power as the path loss.

Further, after receiving the uplink reference signal sent by the UE, the base station may send the second information to the UE on the second carrier. The second information may be used to indicate the receive power, or the second information may be used to indicate the path loss obtained by using the receive power.

107. The UE receives the second information on the second carrier, and obtains a path loss that is on the first carrier.

Specifically, after receiving the second information, the UE can obtain the path loss of the UE and the base station on the first carrier. Optionally, the path loss may be directly indicated in the second information. Alternatively, if the second information indicates only the receive power of the uplink reference signal, the UE may calculate the path loss based on the receive power indicated in the second information and the initial transmit power indicated in the first information.

108. The UE sends an uplink signal on the first carrier based on the path loss.

Specifically, after obtaining the path loss that is on the first carrier, the UE can determine the transmit power on the first carrier based on the path loss and with reference to an uplink power control formula. In this way, the UE can perform uplink transmission on the first carrier based on the determined transmit power, for example, send uplink data or send an uplink reference signal. The base station receives, on the first carrier, the uplink signal sent by the UE based on the path loss, to implement uplink transmission that is between the base station and the UE and that is on the first carrier.

In this embodiment of the present invention, the base station determines the initial transmit power, so that the UE can send the uplink reference signal on the first carrier at the initial transmit power, to determine the path loss on the first carrier based on the receive power of the uplink reference signal and the initial transmit power, thereby implementing uplink transmission on the first carrier by determining the transmit power of the uplink signal based on the path loss. This improves accuracy and reliability of the obtained path loss, resolves a problem that an uplink signal cannot be sent due to a relatively large difference between carrier frequencies, and can implement carrier sharing between different communications systems.

FIG. 4 is a schematic interaction diagram of another communication method according to an embodiment of the present invention. Specifically, as shown in FIG. 4, the communication method in this embodiment of the present invention may include the following steps.

201. A base station determines an initial transmit power of UE on a first carrier and an accumulated power value.

Specifically, the base station may determine a power parameter, and the power parameter includes the initial transmit power of the UE on the first carrier. The initial transmit power is an initial transmit power at which the UE sends a random access preamble to the base station. Further, the power parameter further includes a power adjustment parameter, used to indicate information about the accumulated power value, and the accumulated power value may be used to adjust a transmit power that is for the UE to send the random access preamble to the base station.

Optionally, for a manner in which the base station determines the initial transmit power, refer to the related descriptions in the foregoing embodiment, and details are not described herein again. Further, optionally, the accumulated power value is a power adjustment amount, used by the UE to adjust the transmit power of the random access preamble depending on a success or failure in random access.

202. The base station sends, on a second carrier, first information used to indicate the initial transmit power and the accumulated power value.

The base station sends the first information on the second carrier, where the first information is used to indicate the initial transmit power on the first carrier and the accumulated power value. Further, optionally, the first information may be a system message, RRC signaling, DCI information, or the like. For details, refer to the related descriptions in the foregoing embodiment, and details are not described herein again. In addition, alternatively, the initial transmit power and the accumulated power value may be respectively carried in two pieces of information for indication. This is not limited in this embodiment of the present invention.

203. The UE receives the first information on the second carrier, to obtain the initial transmit power and the accumulated power value.

204. The UE sends a random access preamble on the first carrier based on the initial transmit power, and when random access fails, the UE adjusts, based on the accumulated power value, a transmit power for sending the random access preamble, and re-sends the random access preamble on the first carrier at an adjusted transmit power.

Optionally, the UE may send the random access preamble to the base station on the first carrier at the initial transmit power based on the initial transmit power on the first carrier. When the random access fails, for example, a failure in the random access may be determined when no random access response sent by the base station is received within a specific time window, the UE may re-send the random access preamble based on the accumulated power value. For example, a transmit power of the re-sent random access preamble may be a power value of a previously sent random access preamble plus the accumulated power value.

For example, a power used when the UE sends the random access preamble for the first time may be the initial transmit power. When the random access fails, the UE may re-send the random access preamble. A power used when the UE sends the random access preamble for the second time may be the initial transmit power plus the accumulated power value. When the random access fails, the UE re-sends the random access preamble. A power used when the UE sends the random access preamble for the third time is the power for sending the random access preamble for the second time plus the accumulated power value, that is, the initial transmit power plus twice the accumulated power value. Adjustment is performed by analogy, until the random access succeeds. The initial transmit power may be a relatively small power value, which helps determine the transmit power used when the random access succeeds.

205. When the random access succeeds, the UE sends an uplink signal on the first carrier based on a transmit power used when the random access succeeds.

Specifically, when the random access preamble is successfully sent, that is, when the random access succeeds, the UE may record the transmit power used when the random access succeeds, so that the UE can perform uplink transmission on the first carrier based on the transmit power, for example, send uplink data or send an uplink reference signal. The base station receives, on the first carrier, the uplink signal sent by the UE based on the transmit power, to implement uplink transmission that is between the base station and the UE and that is on the first carrier.

In this embodiment of the present invention, the base station determines the initial transmit power and the accumulated power value, so that the UE can send the random access preamble on the first carrier at the initial transmit power, and when the random access fails, adjust the transmit power based on the accumulated power value, until the random access succeeds, thereby performing uplink transmission based on the transmit power used when the random access succeeds. This resolves a problem that an uplink signal cannot be sent due to a relatively large difference between carrier frequencies, and can implement carrier sharing between different communications systems.

FIG. 5 is a schematic interaction diagram of still another communication method according to an embodiment of the present invention. Specifically, as shown in FIG. 5, the communication method in this embodiment of the present invention may include the following steps.

301. A base station determines a difference between path losses on a first carrier and a second carrier.

Specifically, the base station may determine a power parameter, the power parameter includes a power adjustment parameter, and the power adjustment parameter is the difference between the path loss on the first carrier and the path loss on the second carrier.

Optionally, when determining the difference between the path losses on the first carrier and the second carrier, the base station may determine the difference between the path losses based on carrier frequencies of the first carrier and the second carrier. Specifically, the base station may calculate the difference between the path losses on the first carrier and the second carrier based on the carrier frequencies of the first carrier and the second carrier and a channel model path loss formula of the first carrier and the second carrier. For example, the path loss formula of the first carrier and the second carrier is PL=22.0log10(d3D)+28.0+20log10(fc), where PL is a path loss, d3D is a distance between the UE and the base station, and fc is the carrier frequency of the first carrier or the second carrier. In this case, the difference between the path losses on the first carrier and the second carrier may be determined based on the following formula: $20\log10(fc_1)-20\log10(fc_2)$ or $20\log(fc_1/fc_2)$, where $fc_1$ represents one of the carrier frequency of the first carrier and the carrier frequency of the second carrier, and $fc_2$ represents the other of the carrier frequency of the first carrier and the carrier frequency of the second carrier. Optionally, when determining the difference between the path losses on the first carrier and the second carrier, the base station may alternatively determine the difference between the path losses based on a carrier frequency of the first carrier, a carrier frequency of the second carrier, and a prestored correspondence. Specifically, a table may be predefined. A possible manner is: The predefined table prestores the carrier frequencies of the first carrier and the second carrier and the difference between the corresponding path losses, so that the base station can query, based on the carrier frequencies of the first carrier and the second carrier, the table for the difference between the path losses on the first carrier and the second carrier. A possible form of the table may be shown in the following Table 1:

**Table 1**

| Carrier frequency | Difference between path losses (dB) |
|---|---|
| f1, f2 | 5 |
| f1, f3 | 15 |
| f2, f3 | 10 |

Another possible manner is: The predefined table prestores the difference between the corresponding path losses and a quotient of the carrier frequency of the first carrier and the carrier frequency of the second carrier, so that the base station can query, based on the quotient of the carrier frequencies of the first carrier and the second carrier, the table for the difference between the path losses on the first carrier and the second carrier. A possible form of the table may be shown in the following Table 2:

**Table 2**

| Quotient of carrier frequencies (f1/f2) | Difference between path losses (dB) |
|---|---|
| f1/f2 | 5 |
| f1/f3 | 15 |

Still another possible manner is: The predefined table prestores path losses respectively corresponding to the carrier frequencies of the first carrier and the second carrier, so that the base station can query, based on the carrier frequencies of the first carrier and the second carrier, the table for the path losses respectively corresponding to the first carrier and the second carrier, and then calculate the difference between the path losses on the first carrier and the second carrier. A possible form of the table may be shown in the following Table 3:

**Table 3**

| Carrier frequency | Path loss (dB) |
|---|---|
| f1 | 120 |
| f2 | 125 |

Optionally, when determining the difference between the path losses on the first carrier and the second carrier, the base station may alternatively determine the difference between the path losses based on the path loss on the first carrier and the path loss on the second carrier. Specifically, the base station may determine a path loss of the UE on the first carrier based on a sent signal of the UE on the first carrier. In addition, the base station may further determine a path loss of the UE on the second carrier based on RSRP values on the second carrier that are reported by the UE. In this way, the base station can obtain a difference between the path loss on the first carrier and the path loss on the second carrier based on the path loss on the first carrier and the path loss on the second carrier. Optionally, when determining the difference between the path losses on the first carrier and the second carrier, the base station may alternatively obtain, through combined adjustment, the difference between the path losses on the first carrier and the second carrier based on the difference that is between the path losses on the first carrier and the second carrier and that is obtained in the foregoing manner, for example, use an average value of the difference between the path losses as the determined difference between the path losses on the first carrier and the second carrier.

302. The base station sends, to UE on the second carrier, first information used to indicate the difference between the path losses.

303. The UE receives the first information on the second carrier, and obtains the difference between the path losses.

Specifically, the base station may send the first information on the second carrier, where the first information is used to indicate the difference between the path losses on the first carrier and the second carrier. The UE may receive the first information on the second carrier, to obtain the difference between the path losses on the first carrier and the second carrier.

Optionally, the first information may be a system message, RRC signaling, DCI information, or the like. For details, refer to the related descriptions in the foregoing embodiment, and details are not described herein again.

304. The base station sends a reference signal on the second carrier.

305. The UE receives the reference signal on the second carrier, obtains a receive power of the reference signal through measurement, and determines the path loss on the second carrier based on a transmit power and the receive power of the reference signal.

Specifically, the base station may further send the reference signal on the second carrier. The UE receives, on the second carrier, the reference signal sent by the base station on the second carrier, obtains the transmit power (where the UE may be notified of the transmit power by the base station) of the reference signal, and obtains the receive power of the reference signal through measurement, so that the UE can obtain the path loss on the second carrier based on the transmit power of the reference signal on the second carrier and the receive power of the reference signal. For example, a difference between the transmit power of the reference signal and the receive power of the reference signal is used as the path loss on the second carrier.

In another optional embodiment, the UE may alternatively be notified of the path loss on the second carrier by the base station. For example, the path loss on the second carrier is indicated by using the first information. Details are not described herein again.

306. The UE determines the path loss on the first carrier based on the difference between the path loss on the first carrier and the path loss on the second carrier.

307. The UE sends an uplink signal on the first carrier based on the path loss on the first carrier.

Specifically, after obtaining the path loss on the second carrier, the UE can determine the path loss on the first carrier based on the difference between the path losses on the first carrier and the second carrier and the path loss on the second carrier. Further, after determining the path loss that is on the first carrier, the UE can determine a transmit power on the first carrier based on the path loss. In this way, the UE can perform uplink transmission on the first carrier based on the determined transmit power, for example, send uplink data or send an uplink reference signal. The base station receives, on the first carrier, the uplink signal that is sent by the UE based on the path loss on the first carrier, to implement uplink transmission that is between the base station and the UE and that is on the first carrier.

In this embodiment of the present invention, the base station determines the difference between the path losses on the first carrier and the second carrier, and sends the difference to the UE, so that the UE can determine the path loss on the second carrier, and determine the path loss on the first carrier based on the difference and the path loss on the second carrier, thereby implementing uplink transmission by determining the transmit power of the uplink signal based on the path loss on the first carrier. This resolves a problem that an uplink signal cannot be sent due to a relatively large difference between carrier frequencies, and can implement carrier sharing between different communications systems.

FIG. 6 is a schematic interaction diagram of still another communication method according to an embodiment of the present invention. Specifically, as shown in FIG. 6, the communication method in this embodiment of the present invention may include the following steps.

401. UE determines a difference between path losses on a first carrier and a second carrier.

Optionally, the UE may determine a power parameter, the power parameter includes a power adjustment parameter, and the power adjustment parameter is the difference between the path loss on the first carrier and the path loss on the second carrier. That is, the difference between the path losses may be determined by the UE.

Optionally, when determining the difference between the path losses on the first carrier and the second carrier, the UE may determine the difference between the path losses based on carrier frequencies of the first carrier and the second carrier, or may determine the difference between the path losses based on a carrier frequency of the first carrier, a carrier frequency of the second carrier, and a prestored correspondence, or may determine the difference between the path losses based on the path loss on the first carrier and the path loss on the second carrier. A manner in which the UE determines the difference between the path losses is similar to the manner in which the base station determines the difference between the path losses, and details are not described herein again.

402. A base station sends a reference signal on the second carrier.

403. The UE receives the reference signal on the second carrier, obtains a receive power of the reference signal through measurement, and determines the path loss on the second carrier based on a transmit power and the receive power of the reference signal.

Specifically, for a manner in which the UE obtains the path loss on the second carrier, refer to the related descriptions in the foregoing embodiment, and details are not described herein again.

404. The UE determines the path loss on the first carrier based on the difference between the path loss on the first carrier and the path loss on the second carrier.

405. The UE sends an uplink signal on the first carrier based on the path loss on the first carrier.

Specifically, after obtaining the path loss on the second carrier, the UE can determine the path loss on the first carrier based on the difference between the path losses on the first carrier and the second carrier and the path loss on the second carrier. Further, after determining the path loss that is on the first carrier, the UE can determine a transmit power on the first carrier based on the path loss. In this way, the UE can send the uplink signal on the first carrier based on the determined transmit power. The base station receives, on the first carrier, the uplink signal that is sent by the UE based on the path loss on the first carrier, to implement uplink transmission that is between the base station and the UE and that is on the first carrier.

In this embodiment of the present invention, the UE determines the difference between the path losses on the first carrier and the second carrier, so that the UE can determine the path loss on the first carrier based on the difference and the obtained path loss on the second carrier, thereby implementing uplink transmission by determining the transmit power of the uplink signal based on the path loss on the first carrier. This resolves a problem that an uplink signal cannot be sent due to a relatively large difference between carrier frequencies, and can implement carrier sharing between different communications systems.

FIG. 7 is a schematic interaction diagram of still another communication method according to an embodiment of the present invention. Specifically, as shown in FIG. 7, the communication method in this embodiment of the present invention may include the following steps.

501. A base station sends a reference signal on a second carrier.

502. UE receives the reference signal on the second carrier, obtains a receive power of the reference signal through measurement, and determines a path loss on the second carrier based on a transmit power and the receive power of the reference signal.

Specifically, the base station may send the reference signal on the second carrier. The UE receives, on the second carrier, the reference signal sent by the base station on the second carrier, obtains the transmit power (where the UE may be notified of the transmit power by the base station) of the reference signal, and obtains the receive power of the reference signal through measurement, so that the UE can obtain the path loss on the second carrier based on the transmit power of the reference signal on the second carrier and the receive power of the reference signal.

503. The UE sends an uplink signal on a first carrier based on the path loss on the second carrier.

Specifically, after determining the path loss on the second carrier, the UE can determine the transmit power based on the path loss on the second carrier, and use the determined transmit power as a transmit power on the first carrier, thereby sending the uplink signal on the first carrier at the determined transmit power.

Optionally, the base station may further pre-configure an initial path loss compensation factor, and notifies the UE of the path loss compensation factor, for example, sends the path loss compensation factor to the UE on the second carrier. In this way, the UE can determine the transmit power on the first carrier based on the path loss compensation factor configured by the base station and the path loss that is on the second carrier. Specifically, the UE can substitute the path loss compensation factor into an uplink power control formula, and determine the corresponding transmit power based on the path loss on the second carrier and the path loss compensation factor. Therefore, the UE can send the uplink signal on the first carrier at the transmit power.

504. The base station receives the uplink signal on the first carrier, obtains a receive power of the uplink signal through measurement, and determines, based on the receive power, a power adjustment parameter including a parameter used to adjust a path loss compensation factor.

Specifically, the base station can determine a power parameter, the power parameter may be the power adjustment parameter, and the power adjustment parameter may include the parameter used to adjust the path loss compensation factor.

Optionally, when determining the parameter used to adjust the path loss compensation factor, the base station may compare the receive power of the uplink signal that is obtained through measurement with a target receive power of the UE, to determine whether the configured path loss compensation factor is excessively large or small, and generate the parameter used to adjust the path loss compensation factor. For example, assuming that the receive power that is of the uplink signal sent by the UE on the first carrier and that is obtained through measurement is greater than the target receive power, a value of the path loss compensation factor is decreased. That is, the generated parameter used to adjust the path loss compensation factor is used to instruct to decrease the value of the path loss compensation factor. Otherwise, the value of the path loss compensation factor can be increased. The parameter used to adjust the path loss compensation factor may be an adjusted path loss compensation factor, or may be a difference between the path loss compensation factor before the adjustment and an adjusted path loss compensation factor. The target receive power of the UE may be pre-configured.

505. The base station sends first information to the UE on the second carrier.

The first information is used to indicate the power adjustment parameter, and the power parameter includes the parameter used to adjust the path loss compensation factor.

506. The UE receives the first information on the second carrier, to obtain the parameter used to adjust the path loss compensation factor; and determines an adjusted path loss compensation factor based on the parameter used to adjust the path loss compensation factor.

Specifically, the UE receives the first information on the second carrier, to obtain the parameter that is used to adjust the path loss compensation factor and that is included in the power adjustment parameter, thereby determining the adjusted path loss compensation factor based on the parameter used to adjust the path loss compensation factor.

Optionally, when the parameter used to adjust the path loss compensation factor is the adjusted path loss compensation factor, the UE can directly obtain the adjusted path loss compensation factor. When the parameter used to adjust the path loss compensation factor is the difference between the path loss compensation factor before the adjustment and the adjusted path loss compensation factor, the UE can determine the adjusted path loss compensation factor based on the difference and the path loss compensation factor before the adjustment, for example, use a sum of the path loss compensation factor before the adjustment and the difference as the adjusted path loss compensation factor. The difference may be a positive value or a negative value. For example, when the base station determines that a current path loss compensation factor is excessively large, the difference is a negative value. On the contrary, when the current path loss compensation factor is excessively small, the difference is a positive value.

507. The UE sends an uplink signal on the first carrier based on the adjusted path loss compensation factor and the path loss on the second carrier.

Specifically, after obtaining the path loss on the second carrier and determining the adjusted path loss compensation factor, the UE can substitute the path loss compensation factor into an uplink power control formula, determine the corresponding transmit power based on the path loss on the second carrier and the path loss compensation factor, and use the transmit power as the transmit power on the first carrier. In this way, the UE can perform uplink transmission on the first carrier based on the transmit power obtained after the compensation, for example, send uplink data or send an uplink reference signal. Further, optionally, the UE and the base station may repeat the process of adjusting the transmit power based on the parameter used to adjust the path loss compensation factor, until the target receive power of the UE and the receive power that is of the uplink signal and that is obtained by the base station through measurement are the same or a difference thereof is within a preset threshold range, thereby modifying the transmit power that is on the first carrier. The base station receives, on the first carrier, the uplink signal that is sent by the UE based on the adjusted path loss compensation factor and the path loss on the second carrier, to implement uplink transmission that is between the base station and the UE and that is on the first carrier.

In this embodiment of the present invention, the UE may determine the path loss on the second carrier, and send the uplink signal on the first carrier based on the path loss on the second carrier, so that the base station can determine, based on the receive power of the uplink signal that is obtained through measurement, the parameter used to adjust the path loss compensation factor. In this way, the UE can determine the adjusted path loss compensation factor based on the parameter used to adjust the path loss compensation factor, and further perform sending on the first carrier based on the transmit power of the uplink signal that is determined based on the adjusted path loss compensation factor and the path loss on the second carrier. This improves accuracy and reliability of the determined transmit power on the first carrier, resolves a problem that an uplink signal cannot be sent due to a relatively large difference between carrier frequencies, and can implement carrier sharing between different communications systems.

FIG. 8 is a schematic interaction diagram of still another communication method according to an embodiment of the present invention. Specifically, as shown in FIG. 8, the communication method in this embodiment of the present invention may include the following steps.

601. A base station determines a parameter of a reference signal.

Specifically, the reference signal is carried on a third carrier and is sent by the base station to UE, and the reference signal is used to determine a path loss on a first carrier. The parameter of the reference signal may include a parameter of a reference signal used to instruct the UE to determine the path loss that is on the first carrier, and the parameter is used to instruct the UE to receive the reference signal on the third carrier. The first carrier may be an uplink FDD carrier using a first RAT and a second RAT, the third carrier may be a downlink FDD carrier using the second RAT, and the second carrier may be a carrier using the first RAT. For example, the first carrier may be an uplink FDD carrier shared by 5G NR and LTE, the third carrier may be an LTE downlink FDD carrier paired with the first carrier, and the second carrier may be a carrier in 5G NR. The reference signal may be a CRS that is in an LTE system and that is sent by the base station on the third carrier.

602. The base station sends, to UE on a second carrier, first information used to indicate the parameter of the reference signal.

The parameter of the reference signal may include at least one of parameters such as a cell ID, a transmit power of the CRS, a quantity of ports of the CRS, time-frequency position information of the CRS, and a sequence of the CRS. For example, the parameter of the reference signal may be a parameter of LTE CRS port0.

603. The UE receives the first information on the second carrier, to obtain the parameter of the reference signal; and receives the reference signal on a third carrier based on the parameter of the reference signal.

604. The UE obtains a receive power of the reference signal through measurement, and determines a path loss on the third carrier based on the receive power of the reference signal and a transmit power of the reference signal.

Specifically, the UE can receive the first information on the second carrier, to obtain the parameter of the reference signal. In this way, the UE can receive the reference signal on the third carrier based on the parameter of the reference signal, for example, receive a CRS of LTE port0 and measure a receive power of the CRS. In this way, the UE can determine the path loss on the third carrier based on the receive power of the CRS and a transmit power of the CRS. The UE may be notified of the transmit power of the CRS by the base station. For example, the transmit power is carried in the CRS.

605. The UE sends an uplink signal on a first carrier based on the path loss on the third carrier.

Specifically, after obtaining the path loss on the third carrier, the UE can determine the transmit power corresponding to the path loss on the third carrier based on the path loss and with reference to an uplink power control formula, and use the transmit power as a transmit power on the first carrier. In this way, the UE can perform uplink transmission on the first carrier based on the determined transmit power, for example, send uplink data or send an uplink reference signal. The base station receives, on the first carrier, the uplink signal that is sent by the UE based on the path loss on the third carrier, to implement uplink transmission that is between the base station and the UE and that is on the first carrier.

In this embodiment of the present invention, the base station determines the parameter of the reference signal, and sends, on the second carrier, the first information used to indicate the parameter of the reference signal, so that the UE can receive the reference signal on the third carrier based on the parameter of the reference signal, and obtain the receive power of the reference signal through measurement. In this way, the UE determines the path loss on the third carrier based on the receive power of the reference signal and the transmit power of the reference signal, and uses the path loss on the third carrier as the path loss on the first carrier, thereby implementing uplink transmission on the first carrier by determining the transmit power of the uplink signal based on the path loss on the third carrier. This resolves a problem that an uplink signal cannot be sent due to a relatively large difference between carrier frequencies, and can implement carrier sharing between different communications systems.

FIG. 9 is a schematic structural diagram of an access network device according to an embodiment of the present invention. Specifically, as shown in FIG. 9, the access network device in this embodiment of the present invention may include a determining module 11 and a communications module 12.

The determining module 11 is configured to determine a power parameter, where the power parameter includes at least one of a transmit power of a terminal on a first carrier and a power adjustment parameter, and the first carrier is an uplink carrier.

The communications module 12 is configured to receive an uplink signal sent by the terminal based on the power parameter.

The communications module 12 is further configured to send first information to the terminal, where the first information is used to indicate the power parameter.

The power parameter includes an initial transmit power of the terminal on the first carrier, and the first information is used to indicate the initial transmit power.

Optionally, the communications module 12 may be further configured to receive a reference signal sent by the terminal at the initial transmit power.

The determining module 11 is further configured to obtain a receive power of the reference signal through measurement.

The communications module 12 is further configured to send second information to the terminal, where the second information is used to indicate the receive power or indicate a path loss obtained by using the receive power.

Optionally, the initial transmit power is an initial transmit power at which the terminal sends a random access preamble to the access network device, the power parameter further includes the power adjustment parameter, the power adjustment parameter is used to indicate information about an accumulated power value, and the accumulated power value is used to adjust a transmit power at which the terminal sends the random access preamble to the access network device.

Optionally, the determining module 11 may be specifically configured to:
determine a difference between path losses on the first carrier and a second carrier, where the second carrier is a carrier carrying the first information, the power parameter includes the power adjustment parameter, and the power adjustment parameter is the difference between the path losses.

Optionally, when determining the difference between the path losses on the first carrier and the second carrier, the determining module 11 may be specifically configured to:

determine the difference between the path losses on the first carrier and the second carrier based on a carrier frequency of the first carrier and a carrier frequency of the second carrier; or
determine the difference between the path losses on the first carrier and the second carrier based on a carrier frequency of the first carrier, a carrier frequency of the second carrier, and a prestored correspondence, where the prestored correspondence includes a correspondence among the carrier frequency of the first carrier, the carrier frequency of the second carrier, and the difference between the path losses on the first carrier and the second carrier, or the prestored correspondence includes a correspondence between a quotient of the carrier frequency of the first carrier and the carrier frequency of the second carrier and the difference between the path losses on the first carrier and the second carrier.

Optionally, the difference between the path losses on the first carrier and the second carrier satisfies the following formula:

$$20\log10(fc1)-20\log10(fc2) \text{ or } 20\log(fc1/fc2)$$

where fc1 represents one of the carrier frequency of the first carrier and the carrier frequency of the second carrier, and fc2 represents the other of the carrier frequency of the first carrier and the carrier frequency of the second carrier.

Optionally, the communications module 12 may be further configured to receive the uplink signal sent by the terminal.

The determining module 11 may be further configured to determine, based on a receive power of the uplink signal, a parameter used to adjust a path loss compensation factor, where the power parameter is the power adjustment parameter, and the power adjustment parameter includes the parameter used to adjust the path loss compensation factor.

Optionally, the access network device may implement, by using the modules, some or all steps of the communication method in the embodiments corresponding to FIG. 3 to FIG. 8. It should be understood that, this embodiment of the present invention is an apparatus embodiment corresponding to the method embodiment, and the descriptions in the method embodiment are also applicable to this embodiment of the present invention.

FIG. 10 is a schematic structural diagram of a terminal according to an embodiment of the present invention. Specifically, as shown in FIG. 10, the terminal in this embodiment of the present invention may include a determining module 21 and a communications module 22.

The determining module 21 is configured to determine a power parameter, where the power parameter includes at least one of a transmit power of the terminal on a first carrier and a power adjustment parameter, and the first carrier is an uplink carrier.

The communications module 22 is configured to send an uplink signal on the first carrier based on the power parameter.

The communications module 22 is further configured to receive first information sent by an access network device, where the first information is used to indicate the power parameter.

The power parameter includes an initial transmit power of the terminal on the first carrier, and the first information is used to indicate the initial transmit power.

Optionally, the communications module 22 may be specifically configured to:

send a reference signal to the access network device based on the initial transmit power;
receive second information sent by the access network device, where the second information is used to indicate a receive power obtained by the access network device based on the reference signal or is used to indicate a path loss obtained by using the receive power; and
send the uplink signal on the first carrier based on the receive power or the path loss.

Optionally, the second information is used to indicate the receive power obtained by the access network device based on the reference signal. The determining module 21 may be further configured to determine a path loss on the first carrier based on the receive power of the reference signal and the initial transmit power.

The communications module 22 is further configured to send the uplink signal on the first carrier based on the determined path loss.

Optionally, the power parameter further includes the power adjustment parameter, and the power adjustment parameter is used to indicate information about an accumulated power value. The communications module 22 may be specifically configured to:

send a random access preamble to the access network device based on the initial transmit power;
if random access fails, adjust, based on the accumulated power value, a transmit power for sending the random access preamble, and send the random access preamble at an adjusted transmit power, until the random access succeeds; and
when the random access succeeds, send the uplink signal on the first carrier based on a transmit power used when the random access succeeds.

Optionally, the determining module 21 may be further configured to obtain a path loss on a second carrier, where the second carrier is a carrier carrying the first information, the power parameter includes the power adjustment parameter, and the power adjustment parameter includes a difference between a path loss on the first carrier and the path loss on the second carrier.

The communications module 22 may be specifically configured to:
determine a transmit power based on the path loss on the second carrier and the difference, and send the uplink signal on the first carrier based on the determined transmit power.

Optionally, the power parameter may include the power adjustment parameter, and the power adjustment parameter is a difference between path losses on the first carrier and a second carrier. The determining module 21 may be specifically configured to:

determine the difference between the path losses on the first carrier and the second carrier based on a carrier frequency of the first carrier and a carrier frequency of the second carrier; or
determine the difference between the path losses on the first carrier and the second carrier based on a carrier frequency of the first carrier, a carrier frequency of the second carrier, and a prestored correspondence, where the prestored correspondence includes a correspondence among the carrier frequency of the first carrier, the carrier frequency of the second carrier, and the difference between the path losses on the first carrier and the second carrier, or the prestored correspondence includes a correspondence between a quotient of the carrier frequency of the first carrier and the carrier frequency of the second carrier and the difference between the path losses on the first carrier and the second carrier.

Optionally, the difference between the path losses on the first carrier and the second carrier satisfies the following formula:

$$20\log10(fc1)-20\log10(fc2) \text{ or } 20\log(fc1/fc2)$$

where fc1 represents one of the carrier frequency of the first carrier and the carrier frequency of the second carrier, and fc2 represents the other of the carrier frequency of the first carrier and the carrier frequency of the second carrier.

Optionally, the determining module 21 is further configured to: obtain a path loss on a second carrier, and determine a transmit power based on the path loss on the second carrier, where the second carrier is a carrier carrying the first information.

The communications module 22 is further configured to send the uplink signal on the first carrier based on the determined transmit power, where the power parameter is the power adjustment parameter, the power adjustment parameter includes a parameter used to adjust a path loss compensation factor, and the parameter used to adjust the path loss compensation factor is determined by the access network device based on a receive power of the uplink signal.

The communications module 22 may be further configured to: adjust a transmit power based on the path loss on the second carrier and the parameter used to adjust the path loss compensation factor, and send the uplink signal on the first carrier based on an adjusted transmit power.

Optionally, the terminal may implement, by using the modules, some or all steps of the communication method in the embodiments corresponding to FIG. 3 to FIG. 8. It should be understood that, this embodiment of the present invention is an apparatus embodiment corresponding to the method embodiment, and the descriptions in the method embodiment are also applicable to this embodiment of the present invention.

FIG. 11 is a schematic structural diagram of a communications system according to an embodiment of the present invention. Specifically, as shown in FIG. 11, the communications system in this embodiment of the present invention may include an access network device and a terminal. For the access network device, refer to the related descriptions of the base station in the embodiments corresponding to FIG. 3 to FIG. 8. For the terminal, refer to the related descriptions of the UE in the embodiments corresponding to FIG. 3 to FIG. 8. Details are not described herein again.

FIG. 12 is a schematic structural diagram of another access network device according to an embodiment of the present invention. Specifically, as shown in FIG. 12, the access network device in this embodiment of the present invention may include a communications interface 300, a memory 200, and a processor 100. The processor 100 is connected to the communications interface 300 and the memory 200.

The communications interface 300, the memory 200, and the processor 100 may perform data connection by using a bus, or may perform data connection in another manner. A bus connection is used as an example for description in this embodiment.

The processor 100 may be a central processing unit (English: Central Processing Unit, CPU for short), a network processor (English: Network Processor, NP for short), or a combination of a CPU and an NP.

The processor 100 may further include a hardware chip. The foregoing hardware chip may be an application-specific integrated circuit (English: Application-Specific Integrated Circuit, ASIC for short), a programmable logic device (English: Programmable Logic Device, PLD for short), or a combination thereof. The PLD may be a complex programmable logic device (English: Complex Programmable Logic Device, CPLD for short), a field-programmable logic gate array (English: Field-Programmable Gate Array, FPGA for short), a generic array logic (English: Generic Array Logic, GAL for short), or any combination thereof.

The memory 200 may include a volatile memory (English: Volatile Memory), for example, a random access memory (English: Random-Access Memory, RAM for short). Alternatively, the memory may include a non-volatile memory (English: non-volatile memory), for example, a flash memory (English: flash memory), a hard disk drive (English: Hard Disk Drive, HDD for short), or a solid-state drive (English: Solid-State Drive, SSD for short). Alternatively, the memory 200 may include a combination of the foregoing types of memories.

Optionally, the memory 200 may be configured to store a program instruction. The processor 100 invokes the program instruction stored in the memory 200, and can perform one or more steps or an optional implementation in the embodiments shown in FIG. 3 to FIG. 8, so that the access network device implements functions in the foregoing methods.

FIG. 13 is a schematic structural diagram of another terminal according to an embodiment of the present invention. Specifically, as shown in FIG. 13, the terminal in this embodiment of the present invention may include a communications interface 600, a memory 500, and a processor 400. The processor 400 is connected to the communications interface 600 and the memory 500.

The communications interface 600, the memory 500, and the processor 400 may perform data connection by using a bus, or may perform data connection in another manner. A bus connection is used as an example for description in this embodiment.

The processor 400 may be a CPU, an NP, or a combination of a CPU and an NP.

The processor 400 may further include a hardware chip. The foregoing hardware chip may be an ASIC, a PLD, or a combination thereof. The PLD may be a CPLD, an FPGA, a GAL, or any combination thereof.

The memory 500 may include a volatile memory (English: Volatile Memory), for example, a RAM. Alternatively, the memory may include a non-volatile memory (English: non-volatile memory), for example, a flash memory (English: flash memory), an HDD, or an SSD. Alternatively, the memory 500 may further include a combination of the foregoing types of memories.

Optionally, the memory 500 may be configured to store a program instruction. The processor 400 invokes the program instruction stored in the memory 500, and can perform one or more steps or an optional implementation in the embodiments shown in FIG. 3 to FIG. 8, so that the terminal implements functions in the foregoing methods.

In the several embodiments provided in the present invention, it should be understood that the disclosed apparatus and method may be implemented in other manners. For example, the described apparatus embodiment is merely an example. For example, the module division is merely logical function division and may be other division in actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electronic, mechanical, or other forms.

The modules described as separate parts may or may not be physically separate, and parts displayed as modules may or may not be physical modules, may be located in one position, or may be distributed on a plurality of network modules. Some or all of the modules may be selected according to actual needs to achieve the objectives of the solutions of the embodiments.

In addition, functional modules in the embodiments of the present invention may be integrated into one processing module, or each of the modules may exist alone physically, or two or more modules are integrated into one module. The integrated module may be implemented in a form of hardware, or may be implemented in a form of hardware in addition to a software functional module.

When the foregoing integrated module is implemented in a form of a software functional module, the integrated module may be stored in a computer-readable storage medium. The foregoing software functional module is stored in a storage medium and includes several instructions for instructing a computer device (which may be a personal computer, a server, or a network device) or a processor (processor) to perform a part of the steps of the methods described in the embodiments of the present invention. The foregoing storage medium includes any medium that can store program code, such as a USB flash drive, a removable hard disk, a read-only memory (English: Read-Only Memory, ROM for short), a random access memory (English: Random Access Memory, RAM for short), a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make replacements to some or all technical features thereof. However, the modifications or replacements do not make essence of the corresponding technical solutions depart from the scope of the technical solutions of the embodiments of the present invention.

## Claims

**1.** A communication method, comprising:

determining (101), by an access network device, a power parameter, wherein the power parameter comprises at least one of a transmit power of a terminal on a first carrier and a power adjustment parameter, and the first carrier is an uplink carrier;
sending (102), by the access network device, on a second carrier first information to the terminal, wherein the first information is used to indicate the power parameter, wherein the power parameter comprises an initial transmit power of the terminal on the first carrier, and the first information is used to indicate the initial transmit power; and
receiving, by the access network device, an uplink signal sent by the terminal based on the power parameter.

**2.** The method according to claim 1, wherein after the sending, by the access network device, first information to the terminal, the method further comprises:

receiving (105), by the access network device, a reference signal sent by the terminal at the initial transmit power;
obtaining (105), by the access network device, a receive power of the reference signal through measurement; and
sending (106), by the access network device, second information to the terminal, wherein the second information is used to indicate the receive power or indicate a path loss obtained by using the receive power; and/or
wherein the initial transmit power is an initial transmit power at which the terminal sends (204) a random access preamble to the access network device, the power parameter further comprises the power adjustment parameter, the power adjustment parameter is used to indicate information about an accumulated power value, and the accumulated power value is used to adjust a transmit power at which the terminal sends the random access preamble to the access network device.

**3.** The method according to claim 1, wherein the determining, by an access network device, a power parameter comprises:

determining (301), by the access network device, a difference between path losses on the first carrier and a second carrier, wherein the second carrier is a carrier carrying the first information, the power parameter comprises the power adjustment parameter, and the power adjustment parameter is the difference between the path losses;
wherein preferably the difference between the path losses on the first carrier and the second carrier satisfies the following formula:

$$20\log10(fc_1)-20\log10(fc_2);$$

or

$$20\log(fc_1/fc_2)$$

wherein $fc_1$ represents one of the carrier frequency of the first carrier and the carrier frequency of the second carrier, and $fc_2$ represents the other of the carrier frequency of the first carrier and the carrier frequency of the second carrier.

**4.** The method according to claim 3, wherein the determining, by the access network device, a difference between path losses on the first carrier and a second carrier comprises:

determining (306), by the access network device, the difference between the path losses on the first carrier and the second carrier based on a carrier frequency of the first carrier and a carrier frequency of the second carrier; or
determining, by the access network device, the difference between the path losses on the first carrier and the second carrier based on a carrier frequency of the first carrier, a carrier frequency of the second carrier, and a prestored correspondence, wherein the prestored correspondence comprises a correspondence among the carrier frequency of the first carrier, the carrier frequency of the second carrier, and the difference between the path losses on the first carrier and the second carrier, or the prestored correspondence comprises a correspondence between a quotient of the carrier frequency of the first carrier and the carrier frequency of the second carrier and the difference between the path losses on the first carrier and the second carrier.

**5.** The method according to claim 1, wherein the determining, by an access network device, a power parameter comprises:

receiving (504), by the access network device, the uplink signal sent by the terminal; and
determining (504), by the access network device based on a receive power of the uplink signal, a parameter used to adjust a path loss compensation factor, wherein the power parameter is the power adjustment parameter, and the power adjustment parameter comprises the parameter used to adjust the path loss compensation factor.

**6.** A communication method, comprising:

determining, by a terminal, a power parameter, wherein the power parameter comprises at least one of a transmit power of the terminal on a first carrier and a power adjustment parameter, and the first carrier is an uplink carrier;
receiving (103), by the terminal, first information sent on a second carrier by an access network device, wherein the first information is used to indicate the power parameter, wherein the power parameter comprises an initial transmit power of the terminal on the first carrier, and
the first information is used to indicate the initial transmit power; and
sending, by the terminal, an uplink signal on the first carrier based on the power parameter.

**7.** The method according to claim 6, wherein the sending, by the terminal, an uplink signal on the first carrier based on the power parameter comprises:

sending (104), by the terminal, a reference signal to the access network device based on the initial transmit power;
receiving (107), by the terminal, second information sent by the access network device, wherein the second information is used to indicate a receive power obtained by the access network device based on the reference signal or is used to indicate a path loss obtained by using the receive power; and
sending (108), by the terminal, the uplink signal on the first carrier based on the receive power or the path loss.

**8.** The method according to claim 7, wherein the second information is used to indicate the receive power obtained by the access network device based on the reference signal; and
the sending, by the terminal, the uplink signal on the first carrier based on the receive power comprises:

determining (306), by the terminal, a path loss on the first carrier based on the receive power of the reference signal and the initial transmit power; and
sending (307), by the terminal, the uplink signal on the first carrier based on the determined path loss.

**9.** The method according to claim 6, wherein

the power parameter further comprises the power adjustment parameter, and the power adjustment parameter is used to indicate information about an accumulated power value; and
the sending, by the terminal, an uplink signal on the first carrier based on the power parameter comprises:

sending (204), by the terminal, a random access preamble to the access network device based on the initial transmit power;
if random access fails, adjusting, by the terminal based on the accumulated power value, a transmit power for sending the random access preamble, and sending the random access preamble at an adjusted transmit power, until the random access succeeds; and
when the random access succeeds, sending, by the terminal, the uplink signal on the first carrier based on a transmit power used when the random access succeeds.

**10.** An access network device, configured for performing the method according to any one of claims 1 to 5.

**11.** A terminal, configured for performing the method according to any one of claims 6 to 9.

**Patentansprüche**

**1.** Kommunikationsverfahren, umfassend:

Bestimmen (101) eines Leistungsparameters durch eine Zugangsnetzwerkvorrichtung, wobei der Leistungsparameter mindestens eines von einer Sendeleistung eines Endgerätes auf einem ersten Träger und einem Leistungsanpassungsparameter umfasst und der erste Träger ein Uplink-Träger ist;
Senden (102) von ersten Informationen auf einem zweiten Träger durch die Zugangsnetzwerkvorrichtung an das Endgerät, wobei die ersten Informationen verwendet werden, um den Leistungsparameter anzugeben, wobei der Leistungsparameter eine anfängliche Sendeleistung des Endgerätes auf dem ersten Träger umfasst und die ersten Informationen verwendet werden, um die anfängliche Sendeleistung anzugeben; und
Empfangen eines durch das Endgerät gesendeten Uplink-Signals durch die Zugangsnetzwerkvorrichtung basierend auf dem Leistungsparameter.

**2.** Verfahren nach Anspruch 1, wobei das Verfahren nach dem Senden von ersten Informationen durch die Zugangsnetzwerkvorrichtung an das Endgerät ferner Folgendes umfasst:

Empfangen (105) eines durch das Endgerät mit der anfänglichen Sendeleistung gesendeten Referenzsignals durch die Zugangsnetzwerkvorrichtung;
Erlangen (105) einer Empfangsleistung des Referenzsignals durch die Zugangsnetzwerkvorrichtung mittels Messung; und
Senden (106) von zweiten Informationen durch die Zugangsnetzwerkvorrichtung an das Endgerät, wobei die zweiten Informationen verwendet werden, um die Empfangsleistung anzugeben oder einen durch Verwendung der Empfangsleistung erlangten Pfadverlust anzugeben; und/oder
wobei die anfängliche Sendeleistung eine anfängliche Sendeleistung ist, mit der das Endgerät eine Direktzugriffspräambel an die Zugangsnetzwerkvorrichtung sendet (204), der Leistungsparameter ferner den Leistungsanpassungsparameter umfasst, der Leistungsanpassungsparameter verwendet wird, um Informationen über einen akkumulierten Leistungswert anzugeben, und der akkumulierte Leistungswert verwendet wird, um eine Sendeleistung anzupassen, mit der das Endgerät die Direktzugriffspräambel an die Zugangsnetzwerkvorrichtung sendet.

**3.** Verfahren nach Anspruch 1, wobei das Bestimmen eines Leistungsparameters durch eine Zugangsnetzwerkvorrichtung Folgendes umfasst:

Bestimmen (301) einer Differenz zwischen Pfadverlusten auf dem ersten Träger und einem zweiten Träger durch die Zugangsnetzwerkvorrichtung, wobei der zweite Träger ein Träger ist, der die ersten Informationen trägt, der Leistungsparameter den Leistungsanpassungsparameter umfasst und der Leistungsanpassungsparameter die Differenz zwischen den Pfadverlusten ist;
wobei vorzugsweise die Differenz zwischen den Pfadverlusten auf dem ersten Träger und dem zweiten Träger die folgende Formel erfüllt:

$$20\log10(fc_1)-20\log10(fc_2);$$

oder

$$20\log(fc_1/fc_2),$$

wobei $fc_1$ eine von der Trägerfrequenz des ersten Trägers und der Trägerfrequenz des zweiten Trägers darstellt und $fc_2$ die andere der Trägerfrequenz des ersten Trägers und der Trägerfrequenz des zweiten Trägers darstellt.

**4.** Verfahren nach Anspruch 3, wobei das Bestimmen einer Differenz zwischen Pfadverlusten auf dem ersten Träger und einem zweiten Träger durch die Zugangsnetzwerkvorrichtung Folgendes umfasst:
Bestimmen (306) der Differenz zwischen den Pfadverlusten auf dem ersten Träger und dem zweiten Träger durch die Zugangsnetzwerkvorrichtung basierend auf einer Trägerfrequenz des ersten Trägers und einer Trägerfrequenz des zweiten Trägers; oder Bestimmen der Differenz zwischen den Pfadverlusten auf dem ersten Träger und dem zweiten Träger durch die Zugangsnetzwerkvorrichtung basierend auf einer Trägerfrequenz des ersten Trägers, einer Trägerfrequenz des zweiten Trägers und einer zuvor gespeicherten Entsprechung, wobei die zuvor gespeicherte Entsprechung eine Entsprechung zwischen der Trägerfrequenz des ersten Trägers, der Trägerfrequenz des zweiten Trägers und der Differenz zwischen den Pfadverlusten auf dem ersten Träger und dem zweiten Träger umfasst oder die zuvor gespeicherte Entsprechung eine Entsprechung zwischen einem Quotienten der Trägerfrequenz des ersten Trägers und der Trägerfrequenz des zweiten Trägers und der Differenz zwischen den Pfadverlusten auf dem ersten Träger und dem zweiten Träger umfasst.

**5.** Verfahren nach Anspruch 1, wobei das Bestimmen eines Leistungsparameters durch eine Zugangsnetzwerkvorrichtung Folgendes umfasst:

Empfangen (504) des durch das Endgerät gesendeten Uplink-Signals durch die Zugangsnetzwerkvorrichtung; und
Bestimmen (504) eines Parameters, der verwendet wird, um einen Pfadverlustkompensationsfaktor anzupassen, durch die Zugangsnetzwerkvorrichtung basierend auf einer Empfangsleistung des Uplink-Signals, wobei der Leistungsparameter der Leistungsanpassungsparameter ist und der Leistungsanpassungsparameter den Parameter umfasst, der verwendet wird, um den Pfadverlustkompensationsfaktor anzupassen.

**6.** Kommunikationsverfahren, umfassend:

Bestimmen eines Leistungsparameters durch ein Endgerät, wobei der Leistungsparameter mindestens eines von einer Sendeleistung des Endgerätes auf einem ersten Träger und einem Leistungsanpassungsparameter umfasst und der erste Träger ein Uplink-Träger ist;
Empfangen (103) von ersten Informationen, die durch eine Zugangsnetzwerkvorrichtung auf einem zweiten Träger gesendet werden, durch das Endgerät, wobei die ersten Informationen verwendet werden, um den Leistungsparameter anzugeben, wobei der Leistungsparameter eine anfängliche Sendeleistung des Endgerätes auf dem ersten Träger umfasst und die ersten Informationen verwendet werden, um die anfängliche Sendeleistung anzugeben; und

Senden eines Uplink-Signals auf dem ersten Träger durch das Endgerät basierend auf dem Leistungsparameter.

**7.** Verfahren nach Anspruch 6, wobei das Senden eines Uplink-Signals auf dem ersten Träger durch das Endgerät basierend auf dem Leistungsparameter Folgendes umfasst:

Senden (104) eines Referenzsignals durch das Endgerät an die Zugangsnetzwerkvorrichtung basierend auf der anfänglichen Sendeleistung;
Empfangen (107) von zweiten Informationen, die durch die Zugangsnetzwerkvorrichtung gesendet werden, durch das Endgerät, wobei die zweiten Informationen verwendet werden, um eine Empfangsleistung anzugeben, die durch die Zugangsnetzwerkvorrichtung basierend auf dem Referenzsignal erlangt wird, oder verwendet werden, um einen durch Verwendung der Empfangsleistung erlangten Pfadverlust anzugeben; und
Senden (108) des Uplink-Signals auf dem ersten Träger durch das Endgerät basierend auf der Empfangsleistung oder dem Pfadverlust.

**8.** Verfahren nach Anspruch 7, wobei die zweiten Informationen verwendet werden, um die Empfangsleistung anzugeben, die durch die Zugangsnetzwerkvorrichtung basierend auf dem Referenzsignal erlangt wird; und
das Senden des Uplink-Signals auf dem ersten Träger durch das Endgerät basierend auf der Empfangsleistung Folgendes umfasst:

Bestimmen (306) eines Pfadverlusts auf dem ersten Träger durch das Endgerät basierend auf der Empfangsleistung des Referenzsignals und der anfänglichen Sendeleistung; und
Senden (307) des Uplink-Signals auf dem ersten Träger durch das Endgerät basierend auf dem bestimmten Pfadverlust.

**9.** Verfahren nach Anspruch 6, wobei

der Leistungsparameter ferner den Leistungsanpassungsparameter umfasst und der Leistungsanpassungsparameter verwendet wird, um Informationen über einen akkumulierten Leistungswert anzugeben; und
das Senden eines Uplink-Signals auf dem ersten Träger durch das Endgerät basierend auf dem Leistungsparameter Folgendes umfasst:

Senden (204) einer Direktzugriffspräambel durch das Endgerät an die Zugangsnetzwerkvorrichtung basierend auf der anfänglichen Sendeleistung;
falls der Direktzugriff fehlschlägt, Anpassen einer Sendeleistung zum Senden der Direktzugriffspräambel durch das Endgerät basierend auf dem akkumulierten Leistungswert und Senden der Direktzugriffspräambel mit einer angepassten Sendeleistung, bis der Direktzugriff erfolgreich ist; und
wenn der Direktzugriff erfolgreich ist, Senden des Uplink-Signals auf dem ersten Träger durch das Endgerät basierend auf einer Sendeleistung, die verwendet wird, wenn der Direktzugriff erfolgreich ist.

**10.** Zugangsnetzwerkvorrichtung, die zum Durchführen des Verfahrens nach einem der Ansprüche 1 bis 5 konfiguriert ist.

**11.** Endgerät, das zum Durchführen des Verfahrens nach einem der Ansprüche 6 bis 9 konfiguriert ist.

## Revendications

**1.** Procédé de communication, comprenant :

la détermination (101), au moyen d'un dispositif de réseau d'accès, d'un paramètre de puissance, dans lequel le paramètre de puissance comprend au moins un élément parmi une puissance de transmission d'un terminal sur une première porteuse et un paramètre de réglage de puissance, et la première porteuse est une porteuse de liaison montante ;
l'envoi (102), au moyen du dispositif de réseau d'accès, sur une seconde porteuse, de premières informations au terminal, dans lequel les premières informations sont utilisées pour indiquer le paramètre de puissance, dans lequel le paramètre de puissance comprend une puissance de transmission initiale du terminal sur la première porteuse, et les premières informations sont utilisées pour indiquer la puissance de transmission initiale ; et
la réception, au moyen du dispositif de réseau d'accès, d'un signal de liaison montante envoyé par le terminal sur la base du paramètre de puissance.

2. Procédé selon la revendication 1, dans lequel, après l'envoi, par le dispositif de réseau d'accès, de premières informations au terminal, le procédé comprend également :

la réception (105), au moyen du dispositif de réseau d'accès, d'un signal de référence envoyé par le terminal à la puissance de transmission initiale ;
l'obtention (105), au moyen du dispositif de réseau d'accès, d'une puissance de réception du signal de référence par mesure ; et
l'envoi (106), au moyen du dispositif de réseau d'accès, de secondes informations au terminal, dans lequel les secondes informations sont utilisées pour indiquer la puissance de réception ou indiquer une perte de trajet obtenue en utilisant la puissance de réception ; et/ou
dans lequel la puissance de transmission initiale est une puissance de transmission initiale à laquelle le terminal envoie (204) un préambule d'accès aléatoire au dispositif de réseau d'accès, le paramètre de puissance comprend également le paramètre de réglage de puissance, le paramètre de réglage de puissance est utilisé pour indiquer des informations sur une valeur de puissance accumulée, et la valeur de puissance accumulée est utilisée pour régler une puissance de transmission à laquelle le terminal envoie le préambule d'accès aléatoire au dispositif de réseau d'accès.

3. Procédé selon la revendication 1, dans lequel la détermination, au moyen d'un dispositif de réseau d'accès, d'un paramètre de puissance comprend :

la détermination (301), au moyen du dispositif de réseau d'accès, d'une différence entre les pertes de trajet sur la première porteuse et une seconde porteuse, dans lequel la seconde porteuse est une porteuse transportant les premières informations, le paramètre de puissance comprend le paramètre de réglage de puissance, et le paramètre de réglage de puissance est la différence entre les pertes de trajet ;
dans lequel, de préférence, la différence entre les pertes de trajet sur la première porteuse et la seconde porteuse satisfait à la formule suivante :

$$20\log10(fc_1)-20\log10(fc_2)\ ;$$

ou

$$20\log(fc_1/fc_2)$$

dans lequel $fc_1$ représente l'une parmi la fréquence de porteuse de la première porteuse et la fréquence de porteuse de la seconde porteuse, et $fc_2$ représente l'autre parmi la fréquence de porteuse de la première porteuse et la fréquence de porteuse de la seconde porteuse.

4. Procédé selon la revendication 3, dans lequel la détermination, au moyen du dispositif de réseau d'accès, d'une différence entre des pertes de trajet sur la première porteuse et une seconde porteuse comprend :

la détermination (306), au moyen du dispositif de réseau d'accès, de la différence entre les pertes de trajet sur la première porteuse et la seconde porteuse sur la base d'une fréquence de porteuse de la première porteuse et d'une fréquence de porteuse de la seconde porteuse ; ou
la détermination, au moyen du dispositif de réseau d'accès, de la différence entre les pertes de trajet sur la première porteuse et la seconde porteuse sur la base d'une fréquence de porteuse de la première porteuse, d'une fréquence de porteuse de la seconde porteuse et d'une correspondance préenregistrée, dans lequel la correspondance préenregistrée comprend une correspondance entre la fréquence de porteuse de la première porteuse, la fréquence de porteuse de la seconde porteuse et la différence entre les pertes de trajet sur la première porteuse et la seconde porteuse, ou la correspondance préenregistrée comprend une correspondance entre un quotient de la fréquence porteuse de la première porteuse et la fréquence de porteuse de la seconde porteuse et la différence entre les pertes de trajet sur la première porteuse et la seconde porteuse.

5. Procédé selon la revendication 1, dans lequel la détermination, au moyen d'un dispositif de réseau d'accès, d'un paramètre de puissance comprend :

la réception (504), au moyen du dispositif de réseau d'accès, du signal de liaison montante envoyé par le terminal ; et
la détermination (504), au moyen du dispositif de réseau d'accès sur la base d'une puissance de réception du signal de liaison montante, d'un paramètre utilisé pour régler un facteur de compensation de perte de trajet, dans lequel le paramètre de puissance est le paramètre de réglage de puissance, et le paramètre de réglage de puissance comprend le paramètre utilisé pour régler le facteur de compensation de perte de trajet.

**6.** Procédé de communication, comprenant :

la détermination, au moyen d'un terminal, d'un paramètre de puissance, dans lequel le paramètre de puissance comprend au moins un élément parmi une puissance de transmission du terminal sur une première porteuse et un paramètre de réglage de puissance, et la première porteuse est une porteuse de liaison montante ;
la réception (103), au moyen du terminal, de premières informations envoyées sur une seconde porteuse au moyen d'un dispositif de réseau d'accès, dans lequel les premières informations sont utilisées pour indiquer le paramètre de puissance, dans lequel le paramètre de puissance comprend une puissance de transmission initiale du terminal sur la première porteuse, et
les premières informations sont utilisées pour indiquer la puissance de transmission initiale ; et
l'envoi, par le terminal, d'un signal de liaison montante sur la première porteuse sur la base du paramètre de puissance.

**7.** Procédé selon la revendication 6, dans lequel l'envoi, par le terminal, d'un signal de liaison montante sur la première porteuse sur la base du paramètre de puissance comprend :

l'envoi (104), par le terminal, d'un signal de référence au dispositif de réseau d'accès sur la base de la puissance de transmission initiale ;
la réception (107), par le terminal, de secondes informations envoyées par le dispositif de réseau d'accès, dans lequel les secondes informations sont utilisées pour indiquer une puissance de réception obtenue par le dispositif de réseau d'accès sur la base du signal de référence ou sont utilisées pour indiquer une perte de trajet obtenue en utilisant la puissance de réception ; et
l'envoi (108), par le terminal, du signal de liaison montante sur la première porteuse sur la base de la puissance de réception ou de la perte de trajet.

**8.** Procédé selon la revendication 7, dans lequel les secondes informations sont utilisées pour indiquer la puissance de réception obtenue par le dispositif de réseau d'accès sur la base du signal de référence ; et
l'envoi, par le terminal, du signal de liaison montante sur la première porteuse sur la base de la puissance de réception comprend :

la détermination (306), par le terminal, d'une perte de trajet sur la première porteuse sur la base de la puissance de réception du signal de référence et de la puissance de transmission initiale ; et
l'envoi (307), par le terminal, du signal de liaison montante sur la première porteuse sur la base de la perte de trajet déterminée.

**9.** Procédé selon la revendication 6, dans lequel

le paramètre de puissance comprend également le paramètre de réglage de puissance, et le paramètre de réglage de puissance est utilisé pour indiquer des informations concernant une valeur de puissance accumulée ; et
l'envoi, par le terminal, d'un signal de liaison montante sur la première porteuse sur la base du paramètre de puissance comprend :

l'envoi (204), par le terminal, d'un préambule d'accès aléatoire au dispositif de réseau d'accès sur la base de la puissance de transmission initiale ;
si l'accès aléatoire échoue, le réglage, par le terminal sur la base de la valeur de puissance accumulée, d'une puissance de transmission pour envoyer le préambule d'accès aléatoire, et l'envoi du préambule d'accès aléatoire à une puissance de transmission réglée, jusqu'à ce que l'accès aléatoire réussisse ; et
lorsque l'accès aléatoire réussit, l'envoi, par le terminal, du signal de liaison montante sur la première porteuse sur la base d'une puissance de transmission utilisée lorsque l'accès aléatoire réussit.

**10.** Dispositif de réseau d'accès, configuré pour exécuter le procédé selon l'une quelconque des revendications 1 à 5.

**11.** Terminal, configuré pour exécuter le procédé selon l'une quelconque des revendications 6 à 9.

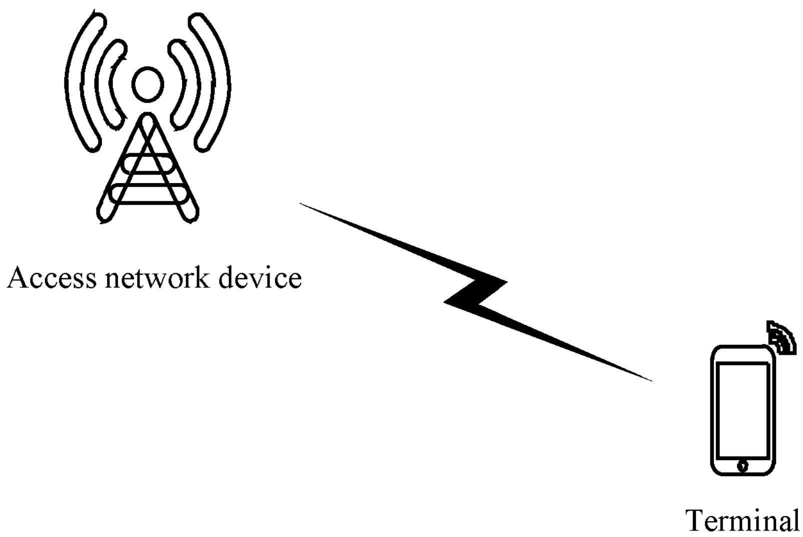
Access network device
Terminal

FIG. 1

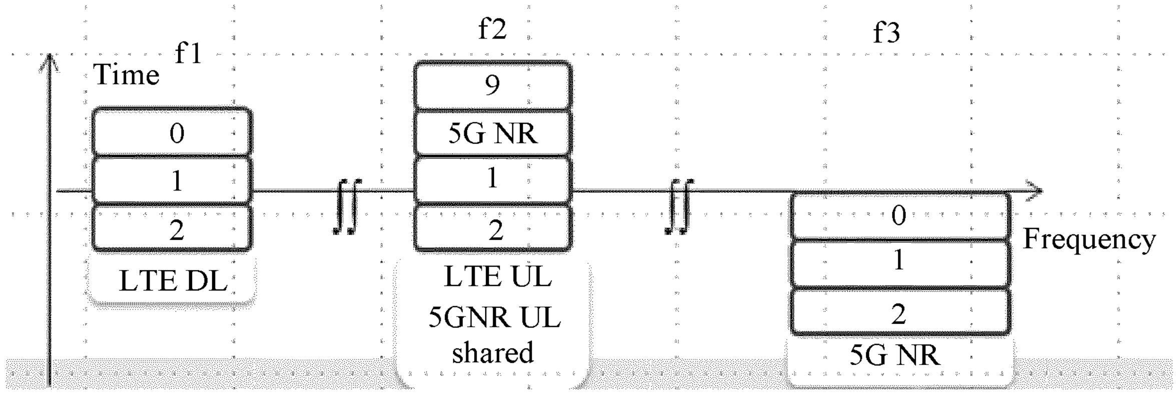
Time
f1
f2
f3
0
1
2
LTE DL
9
5G NR
1
2
LTE UL
5GNR UL
shared
0
1
2
5G NR
Frequency

FIG. 2

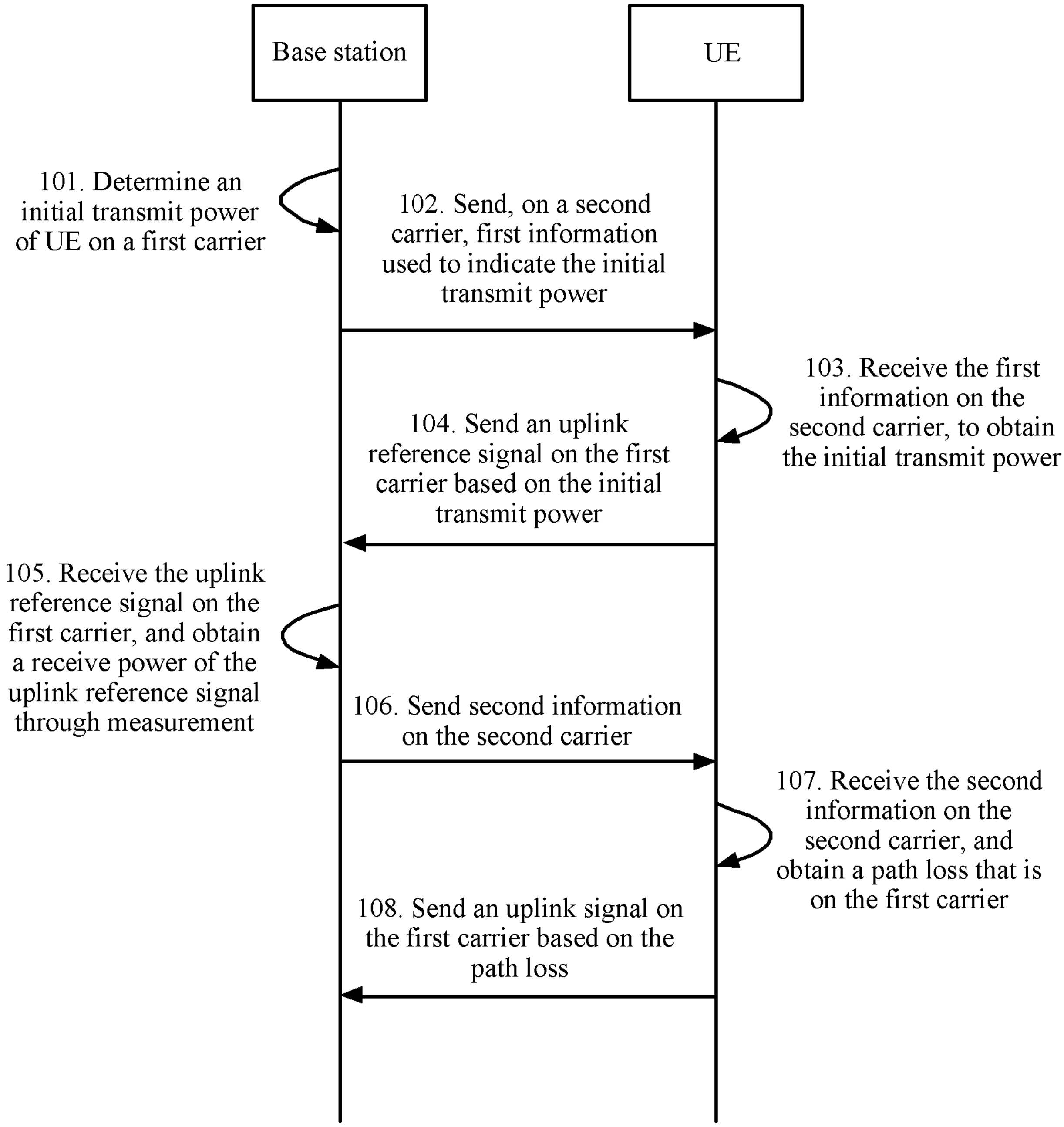
Base station
UE
101. Determine an initial transmit power of UE on a first carrier
102. Send, on a second carrier, first information used to indicate the initial transmit power
103. Receive the first information on the second carrier, to obtain the initial transmit power
104. Send an uplink reference signal on the first carrier based on the initial transmit power
105. Receive the uplink reference signal on the first carrier, and obtain a receive power of the uplink reference signal through measurement
106. Send second information on the second carrier
107. Receive the second information on the second carrier, and obtain a path loss that is on the first carrier
108. Send an uplink signal on the first carrier based on the path loss

FIG. 3

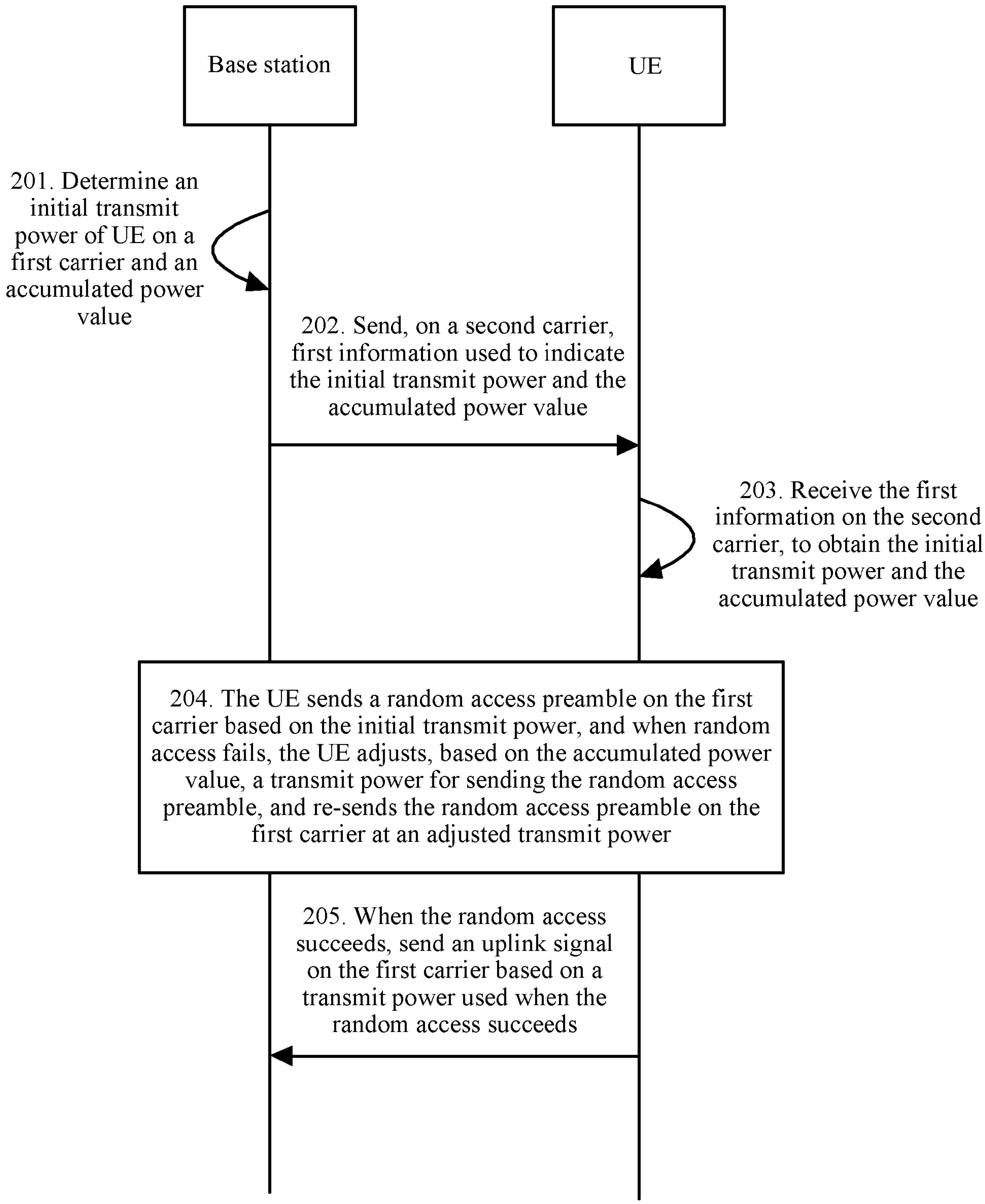
Base station
UE
201. Determine an initial transmit power of UE on a first carrier and an accumulated power value
202. Send, on a second carrier, first information used to indicate the initial transmit power and the accumulated power value
203. Receive the first information on the second carrier, to obtain the initial transmit power and the accumulated power value
204. The UE sends a random access preamble on the first carrier based on the initial transmit power, and when random access fails, the UE adjusts, based on the accumulated power value, a transmit power for sending the random access preamble, and re-sends the random access preamble on the first carrier at an adjusted transmit power
205. When the random access succeeds, send an uplink signal on the first carrier based on a transmit power used when the random access succeeds

FIG. 4

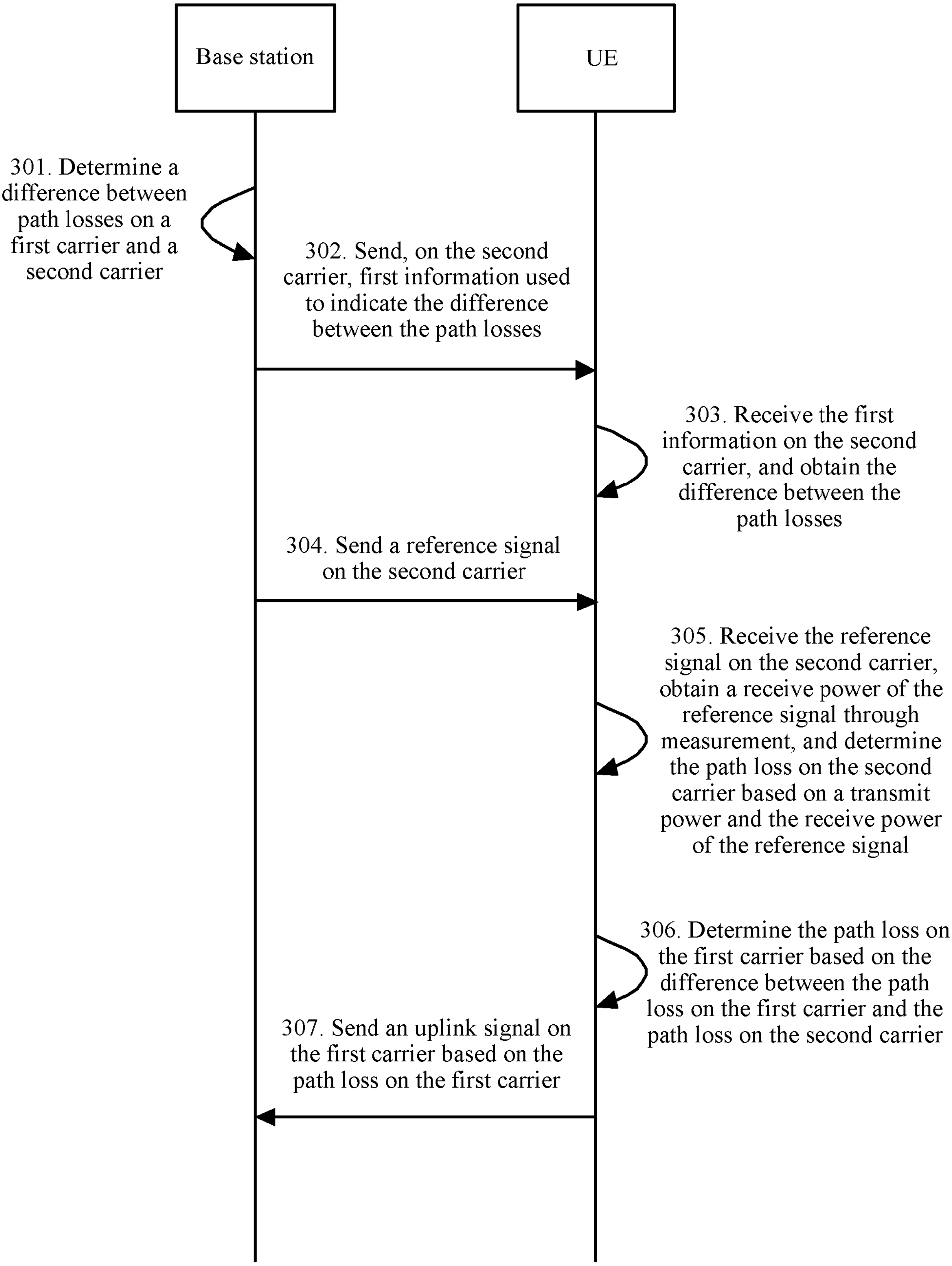
Base station
UE
301. Determine a difference between path losses on a first carrier and a second carrier
302. Send, on the second carrier, first information used to indicate the difference between the path losses
303. Receive the first information on the second carrier, and obtain the difference between the path losses
304. Send a reference signal on the second carrier
305. Receive the reference signal on the second carrier, obtain a receive power of the reference signal through measurement, and determine the path loss on the second carrier based on a transmit power and the receive power of the reference signal
306. Determine the path loss on the first carrier based on the difference between the path loss on the first carrier and the path loss on the second carrier
307. Send an uplink signal on the first carrier based on the path loss on the first carrier

FIG. 5

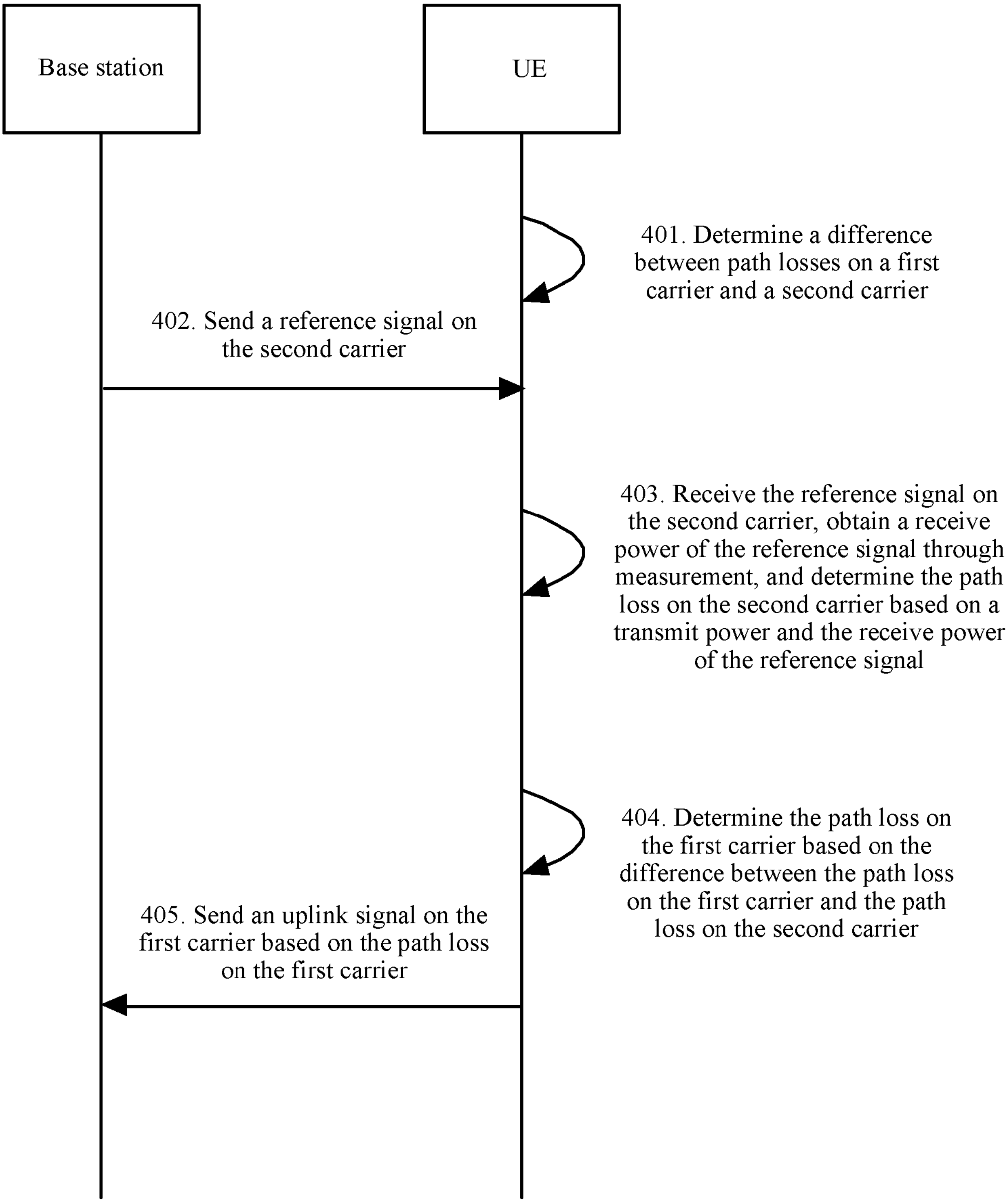
Base station
UE
401. Determine a difference between path losses on a first carrier and a second carrier
402. Send a reference signal on the second carrier
403. Receive the reference signal on the second carrier, obtain a receive power of the reference signal through measurement, and determine the path loss on the second carrier based on a transmit power and the receive power of the reference signal
404. Determine the path loss on the first carrier based on the difference between the path loss on the first carrier and the path loss on the second carrier
405. Send an uplink signal on the first carrier based on the path loss on the first carrier

FIG. 6

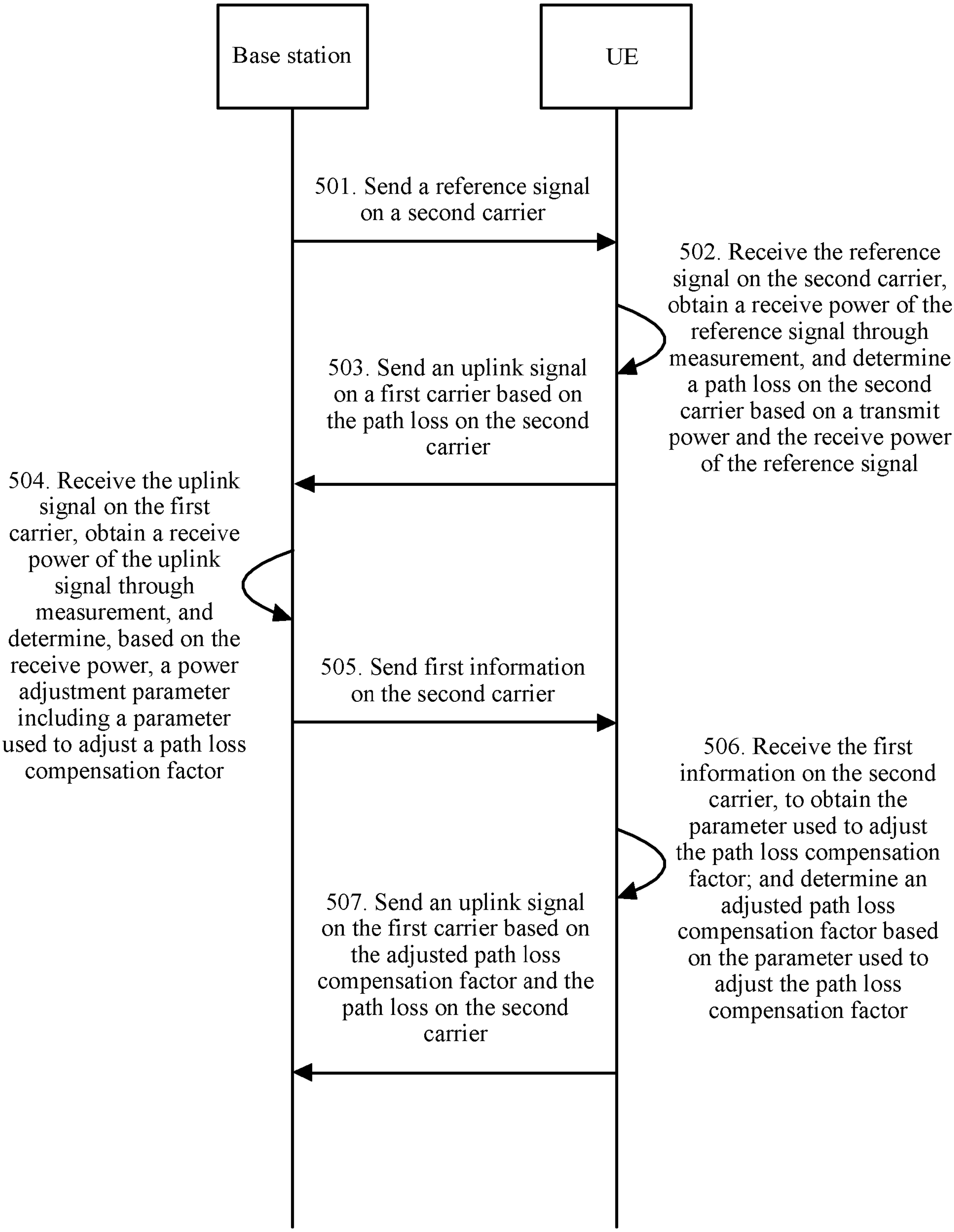
Base station
UE
501. Send a reference signal on a second carrier
502. Receive the reference signal on the second carrier, obtain a receive power of the reference signal through measurement, and determine a path loss on the second carrier based on a transmit power and the receive power of the reference signal
503. Send an uplink signal on a first carrier based on the path loss on the second carrier
504. Receive the uplink signal on the first carrier, obtain a receive power of the uplink signal through measurement, and determine, based on the receive power, a power adjustment parameter including a parameter used to adjust a path loss compensation factor
505. Send first information on the second carrier
506. Receive the first information on the second carrier, to obtain the parameter used to adjust the path loss compensation factor; and determine an adjusted path loss compensation factor based on the parameter used to adjust the path loss compensation factor
507. Send an uplink signal on the first carrier based on the adjusted path loss compensation factor and the path loss on the second carrier

FIG. 7

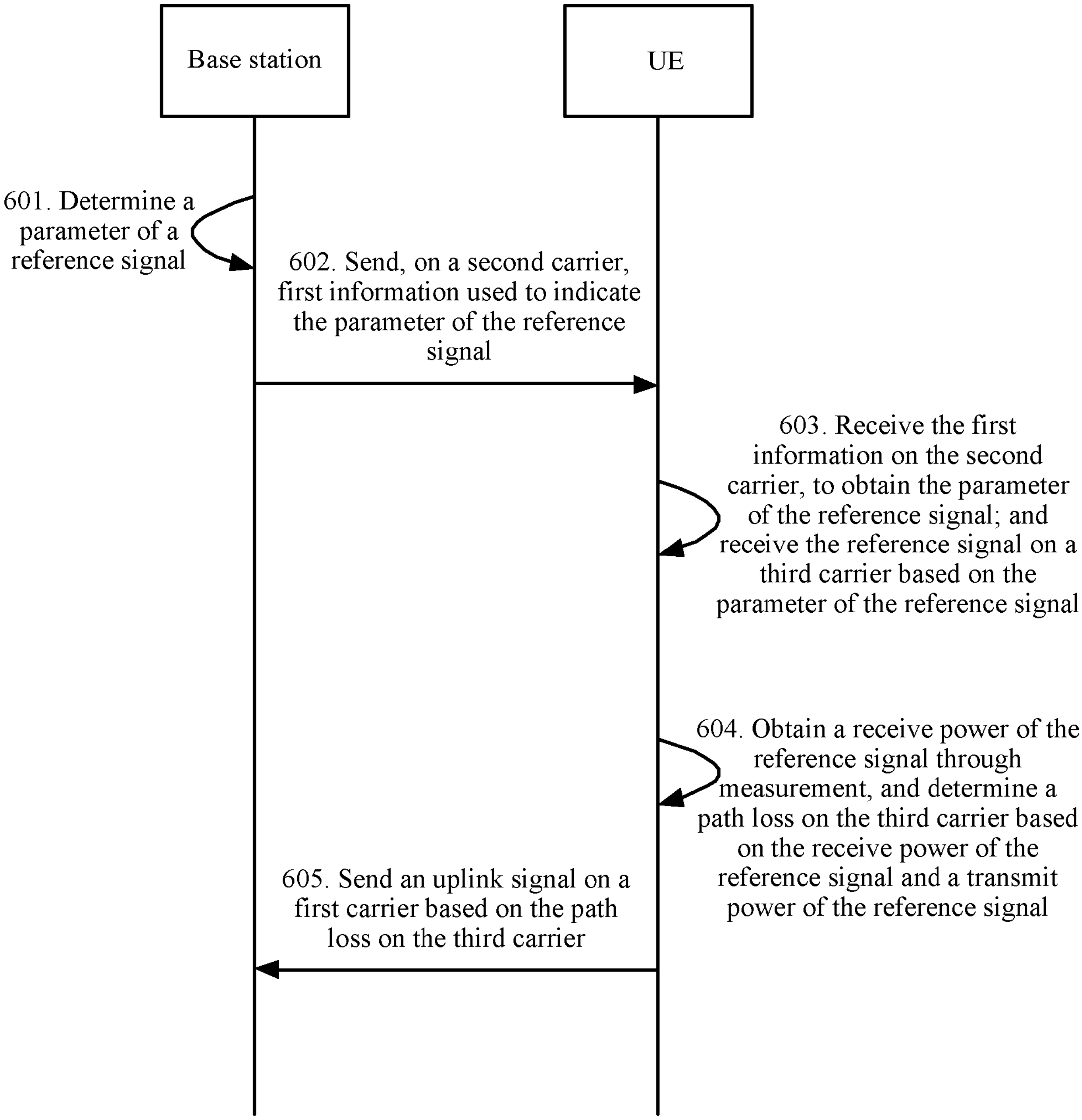
Base station
UE
601. Determine a parameter of a reference signal
602. Send, on a second carrier, first information used to indicate the parameter of the reference signal
603. Receive the first information on the second carrier, to obtain the parameter of the reference signal; and receive the reference signal on a third carrier based on the parameter of the reference signal
604. Obtain a receive power of the reference signal through measurement, and determine a path loss on the third carrier based on the receive power of the reference signal and a transmit power of the reference signal
605. Send an uplink signal on a first carrier based on the path loss on the third carrier

FIG. 8

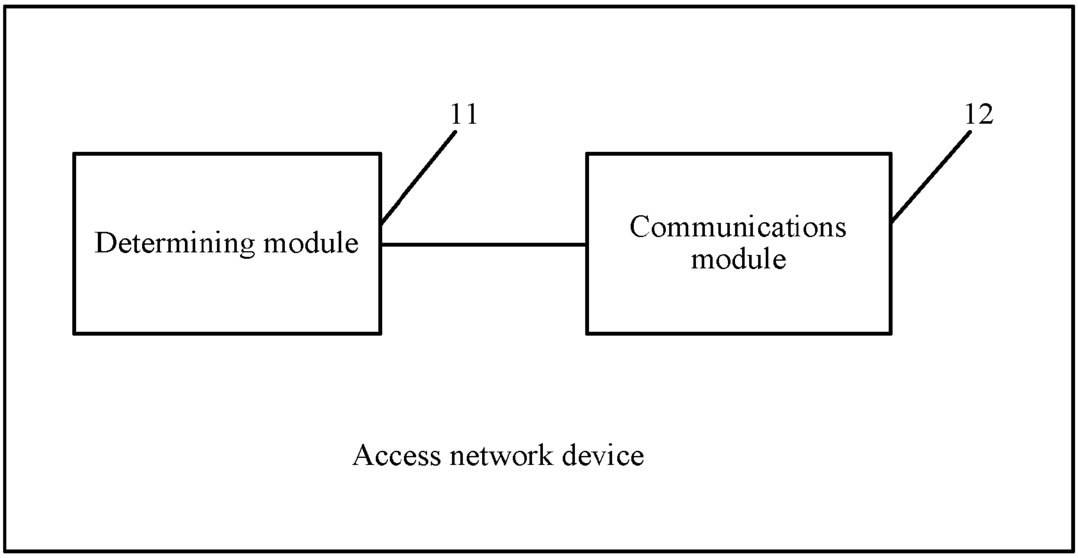
11
12
Determining module
Communications module
Access network device

FIG. 9

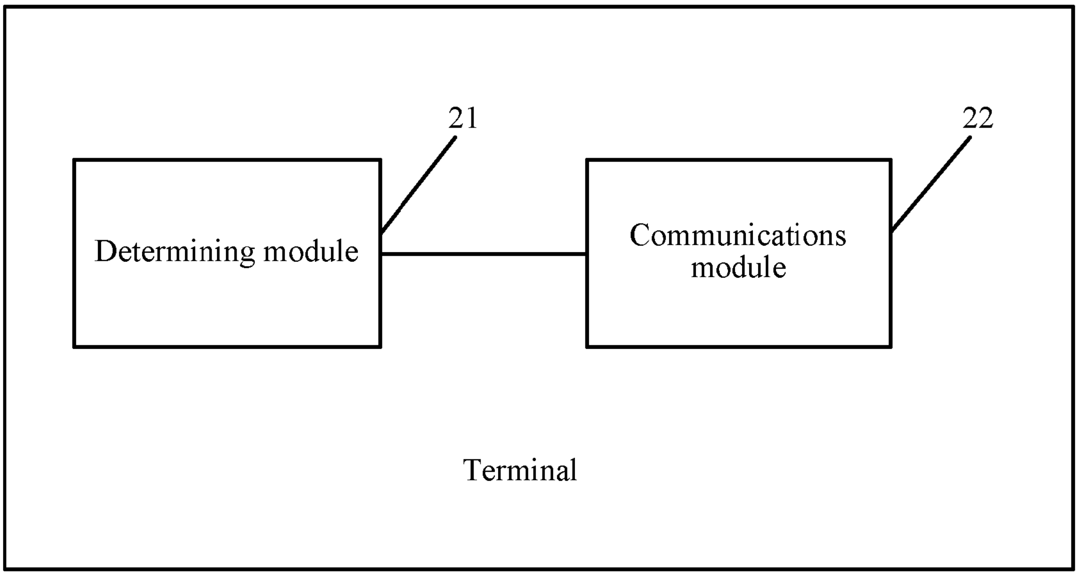
21
22
Determining module
Communications module
Terminal

FIG. 10

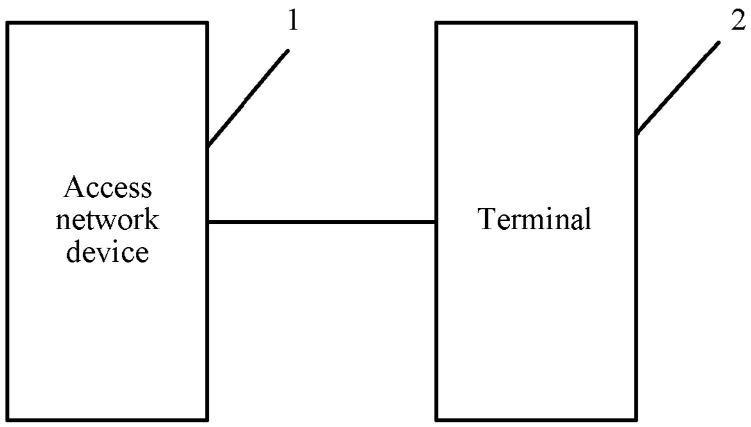
1
2
Access network device
Terminal

FIG. 11

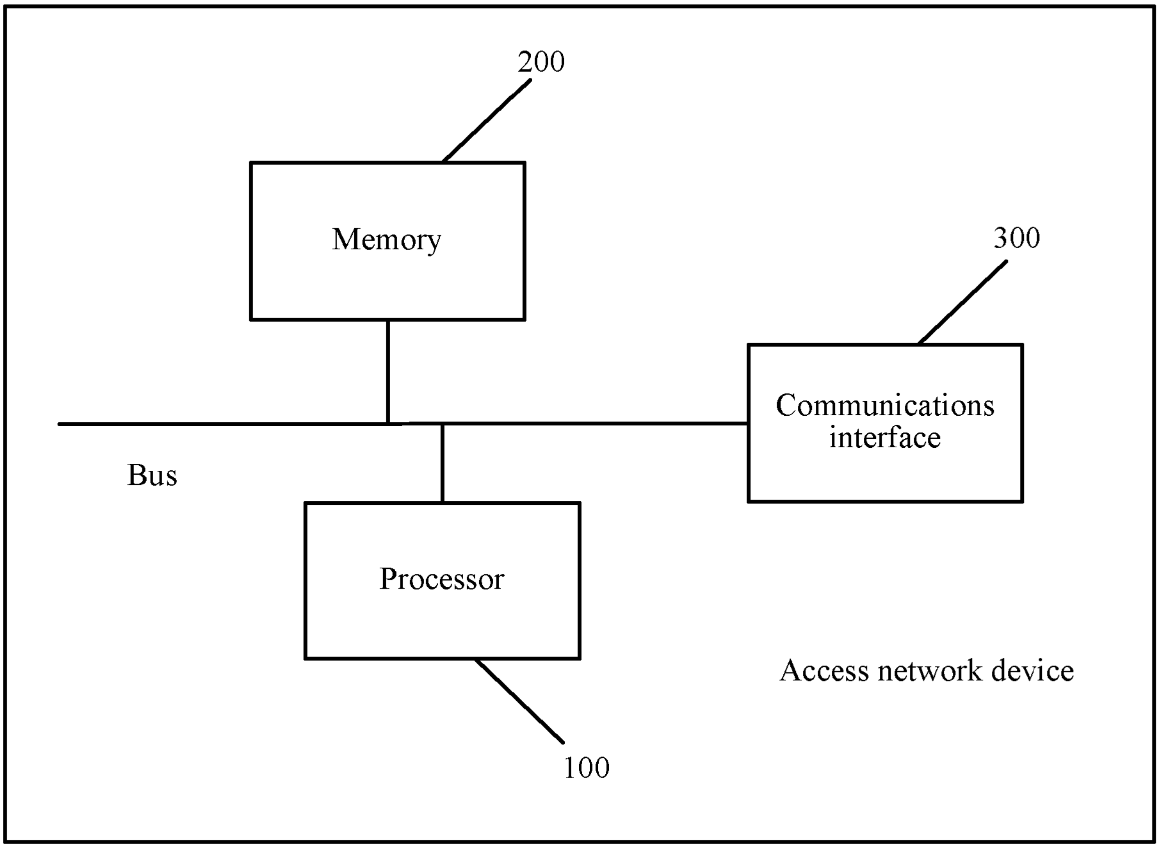
200
Memory
300
Communications interface
Bus
Processor
Access network device
100

FIG. 12

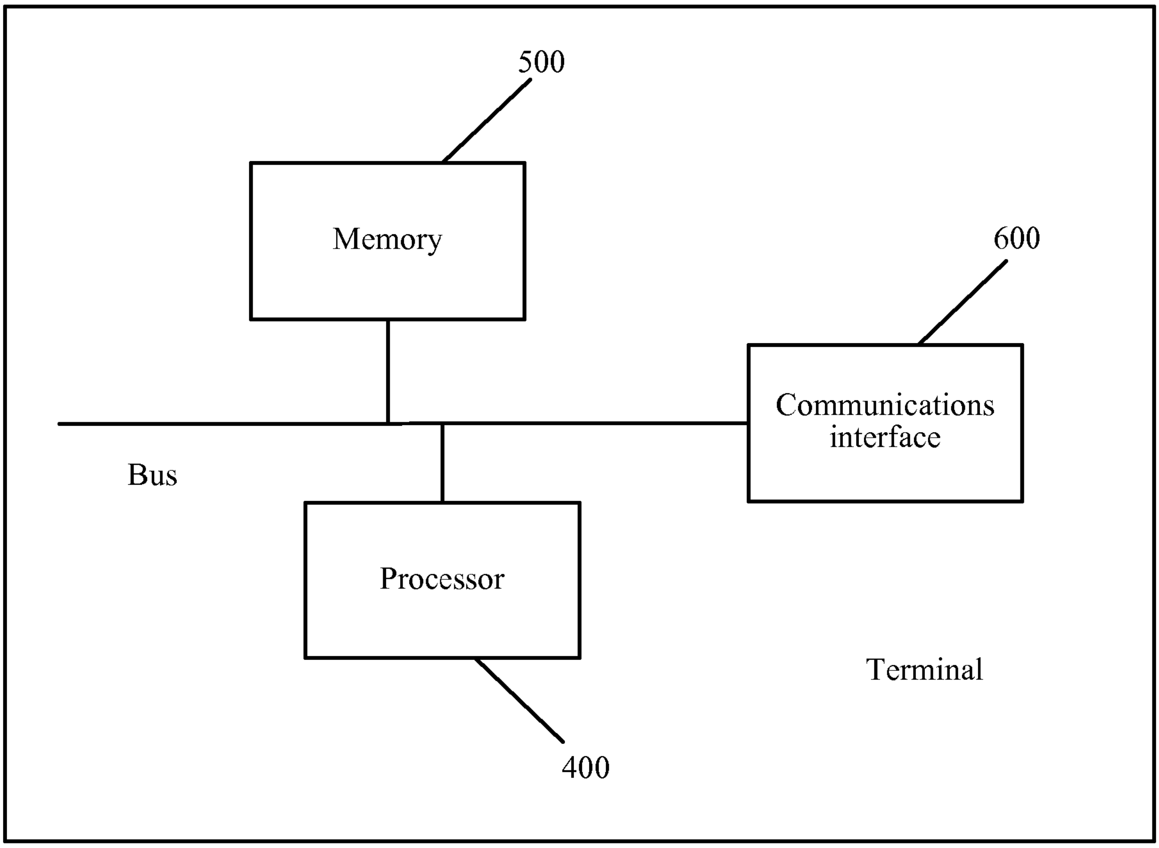
500
Memory
600
Communications interface
Bus
Processor
Terminal
400

FIG. 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 201611262992
- US 2015117307 A1
- US 2011081927 A1
- EP 2741552 A1
- EP 3139669 B1
- US 20130195073 A